# EUROPEAN PATENT APPLICATION

(11) **EP 1 971 011 A2**
(43) Date of publication of application: **17.09.2008**
(21) Application number: 08001326.1
(22) Date of filing: 24.01.2008
(51) Int. Cl.: H02K 3/50

(54) **Winding of an electric machine and its manufacturing process**

(30) Priority: 13.03.2007 JP 2007062754
(71) Applicant: Hitachi, Ltd., Chiyoda-ku Tokyo 100-8280 (JP)
(72) Inventor: Yoshida, Kenichi, Tokyo 100-8220 (JP); Oyama, Kazuto c/o Hitachi, Ltd., IP Group, Tokyo 100-8220 (JP); Shimizu, Hisaya, Tokyo 100-8220 (JP); Umesaki, Yosuke, Tokyo 100-8220 (JP)
(74) Representative: Beetz & Partner

(57) **Abstract**

To provide an electric machine capable of being improved in both fabricability and reliability, and a process for manufacturing the machine.

In order to ensure resolution of the above subject, a stator coil (111) is constructed from a plurality of coil conductors (113) each mounted in two spaced slots (111b), each of the coil conductors (113) is formed under a no-end state at any portions from a connection (113j) to a connection (113k), and a crossover-side coil end (113c) that includes two crossover side portions (113e) and (113f) crossing over from one of two spaced slots (111b) to the other of the slots, guided from an end of a stator core (111) outside the outside of the stator core, and extending in the direction that the crossover-side coil end (113c) is away from the end of the stator core (111) is formed so that an angle (θ1) of a crossover side of the first crossover side portion (113e) with respect to an edge present at the end of the stator core (111) is greater than an angle (θ2) of a crossover side of the second crossover side portion (113f) with respect to the edge present at the end of the stator core (111).

## Description

### BACKGROUND OF THE INVENTION

### 1. Field of the Invention

The present invention relates to an electric machine and a manufacturing process for the same, and typically, to a technique for improving fabricability and reliability of an electric machine having a winding.

### 2. Description of the Related Art

Known existing techniques relating to an electric machine with a winding are disclosed in JP-A-2001-298888 or JP-A-2001-37131, for example.

JP-A-2001-298888 discloses a technique for constructing a stator coil of an alternating-current power generator for a motor vehicle by using a U-shaped segment coil.

JP-A-2001-37131 discloses a technique for constructing a stator coil of an alternating-current power generator for a motor vehicle by using a coil piece that includes a first rectilinear portion, a second rectilinear portion connected to the first rectilinear portion via a single bend, and a third rectilinear portion connected to the second rectilinear portion via a single bend and parallel to the first rectilinear portion.

### SUMMARY OF THE INVENTION

For example, as with the stator coil disclosed in JP-A-2001-298888 or JP-A-2001-37131, a winding provided in an electric machine is constructed to be first guided from both ends of a multi-slotted core outward to an external section of the core and then mounted in two spaced slots in such a form as to cross over the slots. Physical dimensions of the electric machine having the thus-constructed winding are influenced by height of the winding end which has been guided from the ends of the core outward to the core exterior (i.e., influenced by length of the winding in the direction that the winding is away from the ends of the core). For this reason, an increase in the height of the winding end increases the physical dimensions of the electric machine.

In recent years, electric machines have been required to be miniaturized for purposes such as narrowing the space needed to mount the electric machine in a structure (e.g., for such vehicle alternating-current power generator as disclosed in JP-A-2001-298888 or JP-A-2001-37131, an automobile), or reducing costs of the electric machine.

One possible method for miniaturizing an electric machine having the above-constructed winding is by reducing the end of the winding in height. Reduction in the height of the winding end would be achievable by disposing, adjacently to an end of a core, a bend provided at the winding end so as to cross over two spaced slots, and dimensionally reducing a section that ranges from the end of the core to the bend. If the bend at the winding end is disposed adjacently to the end of the core, however, the bend (twisted portion) at the winding end easily comes into point contact with a corner of the core. This is considered to reduce performance of electrical insulation provided at the bend (twisted portion) of the winding end.

For a winding constructed using a U-shaped segment coil, as in the technique that JP-A-2001-298888 discloses, two bends (twisted portions) formed in the U-shaped segment coil are considered to easily come into point contact with each other when the winding is mounted around a core. When the winding constructed using a U-shaped segment coil is mounted around the core, therefore, it is very important to manage properly the two bends formed in the U-shaped segment coil. However, the two bends disposed at inside-diametral and outside-diametral sides of the core are difficult to manage at the same time. In addition, the bend disposed at the inside-diametral side of the core is difficult to manage as well as to view from the outside-diametral side of the core. Consequently, the winding constructed using a U-shaped segment coil, as in the technique of JP-A-2001-298888, is considered to decrease in working efficiency of the mounting operation for the winding.

Additionally, for a winding constructed by connecting different ends of a coil piece (i.e., half-coil) whose rectilinear portions are each interconnected via a single bend, as in the technique that JP-A-2001-37131 discloses, it is considered to be difficult, when the winding is mounted around a core, to cause the bend in the coil piece to come into point contact. However, for the winding constructed with the coil piece connected at ends thereof, it is necessary that insertion of the coil piece into slots of the core and the connection of the coil piece at the ends thereof should be conducted at both ends of the core. Accordingly, mounting the winding around the core requires a large number of man-hours. Consequently, the winding constructed by connecting the ends of the coil piece (half-coil) whose rectilinear portions are each interconnected via a single bend, as in the technique of JP-A-2001-37131, is considered to decrease in working efficiency of the mounting operation for the winding.

The present invention provides, as a typical aspect thereof, an electric machine capable of being improved in both fabricability and reliability, and a process for manufacturing the machine.

More specifically, in a typical aspect of the present invention, a winding mounted around a core which has a plurality of slots is constructed from a plurality of unit windings mounted in two slots spaced from each other, each of the unit windings is formed under a no-end state at any portions from one of two ends to the other end, and a crossover-side conductor end of the unit winding that has two conductor lead-out portions, each of the conductor lead-out portions being adapted to cross over one of the two spaced slots through the other slot, to be guided from an end of the core outward to an external portion of each of the two slots, and to extend in a direction that the conductor lead-out portion is away from the end of the core, is formed such that an angle of the crossover side of one of the two conductor lead-out portions with respect to an edge of the core is greater than an angle of the crossover side of the other conductor lead-out portion.

The no-end state here denotes a connectionless state and indicates that the unit winding is formed of a succession of winding conductors.

According to the foregoing typical aspect of the present invention, the plurality of unit windings can be inserted from one end of the core into the plurality of slots thereof and since the plurality of unit windings can be connected at the other end of the core, mounting the windings around the core does not require a large number of man-hours. In addition, according to the foregoing typical aspect of the present invention, point contact between the core and one of the two conductor lead-out portions at the crossover-side conductor end can be made less prone to occur when the windings are mounted around the core, and appropriate mounting of the windings around the core can be achieved just by managing point contact between the core and one of the two conductor lead-out portions at the crossover-side conductor end. According to the foregoing typical aspect of the present invention, therefore, since an increase in the number of man-hours required for the mounting of the windings around the core can be suppressed and since point contact of the windings with respect to the core can be easily managed, it is possible to improve mounting efficiency of each winding, to suppress decreases in performance of the electrical insulation on the unit winding due to point contact between the core and the bend (twisted portion) in the winding, and hence to improve the performance of the electrical insulation on the winding.

According to a typical aspect of the present invention, both fabricability and reliability of an electric machine can be improved since a winding can be improved in mountability and in performance of electrical insulation.

### BRIEF DESCRIPTION OF THE DRAWINGS

Fig. 1 is a diagram showing a first embodiment of the present invention, and is also a block diagram showing a total system configuration of a driving system mounted in a four-wheel drive vehicle;
Fig. 2 is a block diagram showing an electrical system configuration of a follower driving system mounted in the four-wheel drive vehicle of Fig. 1;
Fig. 3 is a sectional view showing an internal configuration of a motor which forms part of the follower driving system of Fig. 2;
Fig. 4 is an enlarged view that shows one axial end of a stator core which forms part of the motor of Fig. 3, and is an enlarged plan view showing a crossover-side coil end of a coil conductor;
Figs. 5A to 5D are plan views showing partly in perspective form a configuration of the coil conductor of Fig. 4 and the steps of forming the coil conductor;
Fig. 6 is a plan view showing a configuration with a plurality of coil conductors mounted on the stator core of Fig. 4;
Fig. 7 is a plan view showing a moving state of the coil conductor of Fig. 4 during forming of a connecting-side coil end of the coil conductor;
Fig. 8A are diagrams showing stator coil configuration and electromagnetic noise characteristics of the motor of Fig. 3, being a plan view showing the crossover-side coil end of the coil conductor and a characteristics diagram showing a relationship of a noise level (plotted on a vertical axis) with respect to speed (plotted on a horizontal axis), respectively;
Fig. 8B are diagrams showing stator coil configuration and electromagnetic noise characteristics in a comparative example, being a plan view showing the crossover-side coil end of the coil conductor and a characteristics diagram showing a relationship of a noise level (plotted on a vertical axis) with respect to speed (plotted on a horizontal axis), respectively;
Figs. 9A to 9D are diagrams showing a second embodiment of the present invention, and is also a plan view showing partly in perspective form a configuration of and forming steps for a coil conductor mounted on a stator core of a motor;
Fig. 10 is a plan view showing a configuration with a plurality of coil conductors mounted on the stator core of Fig. 9; and
Fig. 11 is a plan view showing a moving state of the coil conductor of Fig. 9 during forming of a connecting-side coil end of the coil conductor.

### DESCRIPTION OF THE PREFERRED EMBODIMENTS

Embodiments of the present invention will be described in accordance with the accompanying drawings.

An example in which a configuration of and a manufacturing process for an electric machine of the present invention are applied to a configuration of and a manufacturing process for an electric motor for driving a vehicle will be described in one embodiment below.

In another embodiment below, a field-winding-type synchronous motor will be described as an example of the motor for driving a vehicle.

In addition, in either of the above two embodiments, a four-wheel drive hybrid electric vehicle that uses an internal combustion engine to drive one of two pairs of front or rear wheels and uses an electric motor to drive the other pair of wheels, more particularly, a four-wheel drive hybrid electric vehicle without a battery for driving an electric motor will be described as an example of a vehicle in which the motor for driving a vehicle is mounted.

The configuration described hereunder can also be applied to other rotary electric machines for a vehicle, such as: a vehicle-mounted auxiliary electric machine, an electric machine for starting an internal combustion engine, and a power generator for a vehicle power supply.

Additionally, the motor for driving a vehicle can be of a permanent-magnet type synchronous motor or of an induction machine.

Furthermore, the automobile in which the motor for driving a vehicle is mounted can be either: a four-wheel drive hybrid electric vehicle having a motor-driving battery instead of the foregoing dedicated power generator for driving an electric motor; a purely electric vehicle with a vehicle-driving electric motor as the only driving source for a vehicle; or a hybrid electric vehicle having a vehicle-driving electric motor and an internal combustion engine as driving sources for a vehicle and using either driving source to drive one of two pairs of front or rear wheels.

Moreover, the configuration described hereunder can also be applied to rotary electric machines in addition to automobiles, such as: an electric motor for driving a train, and a rotary electric machine for industrial equipment (e.g., equipment for driving industrial devices such as pumps, and equipment for driving production devices installed at a factory).

Moreover, the configuration described hereunder can be applied to linear motors as well as to rotary electric machines. The linear motors each include a stator and a movable element disposed opposedly to the stator and movable by a magnetic interaction with the stator. The stator includes a core extending rectilinearly and having a plurality of slots, and a winding constructed by electrically interconnecting a plurality of coil conductors each mounted in two spaced slots. The movable element rectilinearly moves along an opposed surface with respect to the stator by magnetic attraction and repulsion with respect to the stator.

### First Embodiment

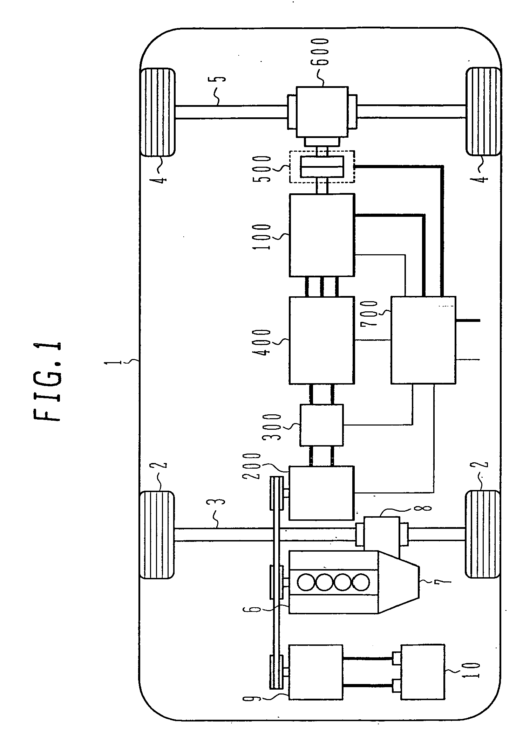

A first embodiment of the present invention will be described in accordance with Figs. 1 to 8.

First, a driving system configuration of a four-wheel drive hybrid electric vehicle without a motor-driving battery is described below using Fig. 1.

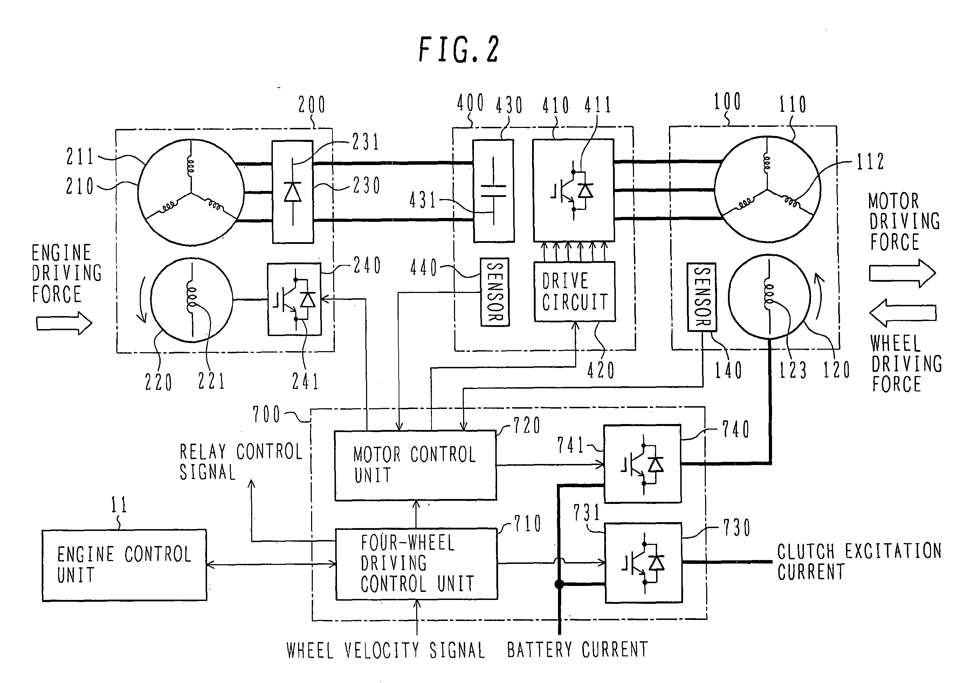

In Fig. 1, a control cable for transmitting control signals is shown with a thin solid line, and an electrical cable for supplying electrical energy is shown with a solid line thicker than the solid line denoting the control cable. These also apply to Fig. 2 described later herein.

The four-wheel drive hybrid electric vehicle without a motor-driving battery (four-wheel drive vehicle 1) is a composite drive vehicle that includes a driving system based on an internal combustion engine 6, and a driving system based on a motor 100 which is a rotary electric machine. The vehicle activates the engine 6 to drive front wheels 2 (main wheels) and activates the motor 100 to drive rear wheels 4 (follower wheels). The engine 6 is a motive power source constituting a main driving system for the front wheels 2, and uses thermal energy to generate rotational motive power in all traveling speed regions of the vehicle. The motor 100 is a motive power source constituting a follower driving system for the rear wheels 4, and uses electrical energy to generate rotational driving force during a time interval from a start of the vehicle to an arrival at a traveling speed region depending only upon power of the engine 6. The motor 100 also generates rotational driving force if, while the front wheels 2 are being driven by the engine 6, front wheel slipping on an ice-covered road or other traveling roads that reduce a road surface friction coefficient µ occurs and thereby the engine 6 cannot transmit the power thereof to the road surface.

Although using the engine 6 and the motor 100 to drive the front wheels 2 and the rear wheels 4, respectively, is taken by way of example in the description of the present embodiment, the system may be constructed so that the engine 6 and the motor 100 drive the rear wheels 4 and the front wheels 2, respectively.

After being gear-changed by an automatic transmission 7, rotational motive power of the engine 6 is transmitted to left and drive shafts 3 of the front wheels 2 via a power transmission mechanism 8. The front wheels 2 are thus driven by the engine 6 in the entire traveling speed range of the vehicle.

An electric power generator 9 for auxiliary devices mounted in the vehicle, and a dedicated electric power generator 200 for driving are mechanically coupled to the engine 6 via a belt. Both power generators are actuated by the rotational motive power of the engine 6, and each generator generates electric power for a specific purpose.

The power generator 9 for the vehicle-mounted auxiliary devices constitutes a 14-volt power supply mounted in the vehicle, and generates direct-current (DC) power for recharging the vehicle-mounted battery 10 whose nominal output voltage is 12 volts. The power generator 9 for the auxiliary devices also generates DC power for driving the vehicle-mounted auxiliary devices.

The dedicated power generator 200 for driving constitutes a motor power supply for generating dedicated driving power for the motor 100. Also, the dedicated power generator 200 for driving constitutes a 42-volt power supply mounted in the vehicle, the generator 200 being capable of generating power higher than that of the power generator 9 for the vehicle-mounted auxiliary devices. The generator 200 can generate a variable output voltage ranging from 0 volts to 50 or 60 volts, depending on the driving force required of the motor 100.

An example in which the dedicated power generator 200 for driving is equipped as the power supply for the motor 100 is described in the present embodiment. In this example, a dedicated large-capacity battery for motor driving is unnecessary, and accordingly a mounting space for the follower driving system of the follower drive wheels (in the present embodiment, the rear wheels 4) can be reduced and the follower driving system for the follower drive wheels can be supplied at an inexpensive price, compared with the follower driving system of a mechanical four-wheel drive vehicle which uses engine power to drive front and rear wheels.

In addition, in the present embodiment, the motor 100 is driven with the driving-dedicated power generator 200 as its power supply at a low voltage level and a high current level, so it is possible to obtain a high torque output required in the traveling performance of the vehicle, and hence to supply a follower driving system substantially equivalent to that of the mechanical four-wheel drive vehicle which uses engine power to drive front and rear wheels.

The vehicle-mounted auxiliary power generator 9 and the dedicated power generator 200 for driving are arranged inside the engine room together with the engine 6. Since the dedicated power generator 200 for driving is a water-cooled enclosed rotary electric machine and since the vehicle-mounted auxiliary power generator 9 is an air-cooled open rotary electric machine, a position at which the power generator 200 is installed with respect to the engine 6 can be lower than a position of the power generator 9 is installed with respect to the engine 6.

As described above, a battery for motor driving is absent in the present embodiment. The DC power that has been output from the dedicated power generator 200 for driving, therefore, is input directly to a DC side of an inverter unit 400 via a relay 300. The inverter unit 400 converts the input DC power into three-phase AC power required for the driving of the motor 100, and supplies the thus-obtained three-phase AC power to the motor 100. The motor 100 then operates on the three-phase AC power, thus generating the rotational motive power necessary to drive the rear wheels 4.

Rotational power from the motor 100 is transmitted to left and right drive shafts 5 of the rear wheels 4 via a clutch 500 connected to an output end of the motor 100, and a differential gear 600 connected to an output end of the clutch 500. Thus, the rear wheels 4 are driven by using the rotational motive power of the motor 100 during the time interval from the start of the vehicle to the arrival thereof at a traveling speed region depending only upon power of the engine 6. For the same reason, the rear wheels 4 are also driven if, while the front wheels 2 are being driven by the engine 6, front wheel slipping on an ice-covered road or other traveling roads that reduce the road surface friction coefficient µ occurs and the engine 6 cannot transmit the power thereof to the road surface. The follower driving system in the present embodiment, therefore, allows the vehicle to be started and run at high torque while the vehicle is stabilized, and even if the front wheels 2 slip, immediately makes the front wheels grip the road surface so that the vehicle can be stably and reliably run on the traveling road of a small friction coefficient µ.

The differential gear 600 is a power transmission mechanism for distributing the rotational motive power of the motor 100 to the left and right drive shafts 5, and has an integrated set of reduction gears for reducing the rotational motive power of the motor 100.

The motor 100 and the inverter unit 400 are arranged adjacently to each other, and both are installed in a narrow underfloor space ranging from a rear seat of the vehicle to a trunk room and neighboring the differential gear 600.

While an example in which the motor 100 and the inverter unit 400 are arranged separately from each other is taken in the description of the present embodiment, both may be formed into a mechanically and electrically integrated unit. In this case, miniaturization of the devices and improvement of their mountability in the vehicle can be achieved.

Alternatively, the motor 100 may be integrated with the clutch 500 and the differential gear 600.

The clutch 500 is an electromagnetic power cutoff mechanism that controls motive power transmission by controlling two clutch plates by means of electromagnetic force. During the time interval from the start of the vehicle to the arrival thereof at a traveling speed region depending only upon the power of the engine 6, and in up to a maximum traveling speed region that permits the rear wheels 4 to be driven by the rotational motive power of the motor 100, if the front wheels 2 driven by the engine 6 slip on an ice-covered road or other traveling roads that reduce the road surface friction coefficient µ and the power of the engine 6 cannot be transmitted to the road surface, the clutch 500 is controlled motive power transmission to engage the two clutch plates and transmit the rotational power of the motor 100 to the differential gear 600. When the vehicle is in the traveling speed region depending only upon the power of the engine 6, motive power transmission is controlled to disengage the two clutch plates and cut off the transmission of the rotational power from the motor 100 to the differential gear 600.

Operation of the devices constituting the follower driving system of the rear wheels 4 is controlled by signals or electric power supplied from an electronic circuit unit 700. The electronic circuit unit 700 has a plurality of control circuit boards. A microcomputer for executing preprogrammed arithmetic operations required for control of each device, a storage memory in which the programs required for the arithmetic operations in the microcomputer, maps, parameters, and other data are prestored, integrated circuits (ICs) formed by integrating resistors and other circuit elements, and a plurality of other electronic components are mounted on each control circuit board. These control circuit boards constitute a four-wheel driving controller, a motor controller, and chopper circuits. These constituent elements of each control board will be described later herein.

The kinds of control that the electronic circuit unit 700 undertakes include: field control that controls the generation of electric power in the driving-dedicated power generator 200 by controlling a field current supplied thereto; relay control that controls electrical connection between the driving-dedicated power generator 200 and the inverter unit 400 by controlling contact point driving of the relay 300; driving control that controls the driving of the motor 100 by controlling electric power conversion by the inverter unit 400; field control that controls the driving of the motor 100 by controlling a field current supplied thereto; and clutch control that controls the engagement and disengagement of the clutch 500 by controlling a field current supplied thereto.

Each device constituting the follower driving system of the rear wheels 4, and the electronic circuit unit 700 are electrically connected via a signal cable or an electrical cable. The vehicle-mounted battery 10 and the electronic circuit unit 700 are electrically connected via an electrical cable. Engine components (an air throttle valve, intake and exhaust valves, and a fuel injection valve), an engine control unit that controls, in addition to operation of a gear-shifting mechanism constituting the automatic transmission 7, operation of the power generator 9 for the vehicle-mounted auxiliary devices, an anti-lock brake system controller that controls operation of a caliper cylinder mechanism constituting an anti-lock brake system, and other vehicle-mounted controllers (not shown) are electrically connected to the electronic circuit unit 700 via a local area network (LAN) cable. Thus, the vehicle-mounted controllers can share information that each thereof possesses, and the electronic circuit unit 700 can acquire an engine speed signal, a shift lever position signal, an accelerator opening angle signal, and a brake stroke signal, from the engine control unit. The electronic circuit unit 700 can also acquire a wheel velocity signal from the anti-lock brake system. The electronic circuit unit 700 can acquire these signals as input information when necessary, and can use the acquired input information to conduct each kind of control outlined above.

An example in which the engine control unit controls the operation of the gear-shifting mechanism constituting the automatic transmission 7 is described in the present embodiment. If the vehicle has a gear shift control unit, the operation of the gear-shifting mechanism constituting the automatic transmission 7 is controlled by the gear shift control unit. In this case, the shift lever position signal input to the electronic circuit unit 700 will be acquired from the gear shift control unit via the LAN cable.

Next, a configuration of the follower driving system for the rear wheels 4 is described in detail below using Fig. 2.

The relay 300 and the clutch 500 are omitted from Fig. 2.

The electronic circuit unit 700 includes the four-wheel driving controller 710, the motor controller 720, and the chopper circuits 730, 740.

Although an example in which the four-wheel driving controller 710, the motor controller 720, and the chopper circuits 730, 740 are integrated into one electronic circuit unit 700 is described in the present embodiment, the constituent elements of the electronic circuit unit 700 may each be a separate structure. Alternatively, only the four-wheel driving controller 710'may be constructed separately and the remaining constituent elements integrated into one unit.

An example in which the electronic circuit unit 700 is provided separately from the motor 100 and the inverter unit 400 is also described in the present embodiment. To construct the motor 100 and the inverter unit 400 into a mechanically and electrically integrated unit, the electronic circuit unit 700 may be integrally incorporated into the integrated unit. In this case, the four-wheel driving controller 710 may be built together with the motor controller 720 and the chopper circuits 730, 740 into the unit or only the four-wheel driving controller 710 may be provided separately outside the unit. Otherwise, the motor controller 720 may be assembled into the inverter unit 400, the chopper circuit 730 into the clutch 500, and/or the chopper circuit 740 into the motor 100.

The four-wheel driving controller 710 acquires, as input information, the shift lever position signal and accelerator opening angle signal output from the engine control unit 11, and the wheel velocity signal output from the anti-lock brake system controller. On the basis of the input information, the four-wheel driving controller 710 outputs a motor torque target data signal as output information to the motor controller 720. On the basis of the input information, the four-wheel driving controller 710 also outputs a clutch control command signal for driving the clutch 500, to the chopper circuit 730, and a relay control command signal for driving the relay 300, to a driver circuit of the relay 300, as output information.

The motor controller 720 acquires, as input information, the motor torque target data signal output from the four-wheel driving controller 710, the engine speed signal output from the engine control unit 11, and a motor armature current signal, motor field current signal, motor speed signal, and capacitor voltage signal (inverter input voltage signal) output from later-described sensors 140 and 440. On the basis of these signals, the motor controller 720 outputs an inverter control command signal, a motor field control command signal, and a generator field control command signal to the inverter unit 400, the chopper circuit 740, and a voltage regulator 240 of the driving-dedicated electric power generator 200, respectively, as output information. The inverter control command signal controls driving of the inverter unit 400, the motor field control command signal controls the field current of the motor 100, and the generator field control command signal controls the field current of the driving-dedicated electric power generator 200.

The chopper circuits 730, 740 are each a current controller which, on the basis of the command signals output from the four-wheel driving controller 710 and the motor controller 720, the controller repeats conducting and cutting off the current supplied from the vehicle-mounted battery 10, controls an average value of output voltages supplied to an associated load (excitation winding or field winding), and controls a flow of current into the associated load. Each chopper circuit includes elements such as a switching semiconductor device 731 or 741, a driver circuit for driving the switching semiconductor device. An exciting current that flows from the vehicle-mounted battery 10 into the excitation winding (not shown) of the clutch 500 is controlled by the chopper circuit 730. A field current that flows from the vehicle-mounted battery 10 into the excitation winding 123 (not shown) of the rotor 120 of the motor 100 is controlled by the chopper circuit 740.

The driving-dedicated power generator 200 is an AC synchronous rotary electric machine which, as described above, is driven by the driving force of the engine 6 via a belt and supplies to the inverter unit 400 the electric power requested for driving the motor 100. The power generator 200 includes a stator 210, a rotor 220, a rectifier 230, and the voltage regulator 240.

The stator 210 and the rotor 220 are arranged so that central axes of both are concentric, and both elements are radially opposed to each other.

The stator 210 is an armature constructed with armature windings 211 wound around an armature core (not shown).

The rotor 220 is a field system of a Rundell-type structure, constructed by winding a magnetic field coil 221 around a magnetic pole core (not shown) on which claw poles magnetized to have one polarity and claw poles magnetized to have another polarity are circumferentially arranged at alternate positions, and providing rectangularly parallelepipedic permanent magnets (not shown) between the circumferentially adjacent claw poles. Each permanent magnet is magnetized so that polarity of a circumferential face is the same as that of the circumferentially opposed claw poles.

The rectifier 230 is a converter that rectifies three-phase AC power output from the armature windings 211, into DC power form. The rectifier 230 includes a three-phase bridge rectifying circuit in which three series circuits each with two diodes 231 electrically connected in series for a specific phase are electrically connected in parallel (i.e., connected in bridge form).

In accordance with a command signal output from the motor controller 720, the voltage regulator 240 controls a field current supplied to the field coil 221, and thus controls a supply voltage output from the driving-dedicated power generator 200. The voltage regulator 240 includes elements such as a switching semiconductor device 241 and a driver circuit for driving the switching semiconductor device. Before the driving-dedicated power generator 200 starts operating (i.e., when the electric power level is too low for a predetermined field current to be obtained), the field current that flows into the field coil 221 is supplied from the vehicle-mounted battery 10, and after the operational start of the driving-dedicated power generator 200, the field current is supplied from an output end of the rectifier 230.

When the field current controlled by the voltage regulator 240 flows into the field coil 221 via a conductor (not shown) that achieves electrical connection by mechanical sliding contact between a brush and a slip ring, the claw poles become magnetized to assume associated polarities and hence to form a magnetic circuit in which a set of magnetic fluxes that has occurred in the rotor 220 extends from the claw poles of one polarity through the stator 210 to the claw poles of the other polarity. When the driving force of the engine 6 rotates the rotor 220 under that state, the fluxes that have been output from the rotor 220 become crossed with the three-phase armature windings 211 and a voltage gets induced in each of the three-phase armature windings 211. Thus, three-phase AC power is output from the armature windings 211. The output three-phase AC power is next rectified into DC power by the rectifier 230 and supplied to the inverter unit 400.

The inverter unit 400 is a power converter by which, in accordance with a command signal output from the motor controller 720, the DC power output from the driving-dedicated power generator 200 is converted into the three-phase AC power required for the driving of the motor 100 and then the converted three-phase AC power is supplied thereto. The inverter unit 400 includes a power module 410, a driver circuit 420, a smoothing circuit, and a sensor 440.

The power module 410 is a semiconductor circuit unit constructed so that the DC power supplied from the driving-dedicated power generator 200 will be converted into three-phase AC power by a switching action of a switching semiconductor device 411. The power module 410 includes a power conversion circuit in which three series circuits each with two switching semiconductor devices 411 electrically connected in series for a specific phase are electrically connected in parallel (i.e., connected in bridge form). The power module 410 is electrically connected between the driving-dedicated power generator 200 and the motor 100.

The present embodiment uses a metal-oxide-semiconductor field-effect transistor (MOSFET) as the switching semiconductor device 411. A parasitic diode is electrically connected between a drain electrode and source electrode of the MOSFET so that a current flows in a forward direction from the source electrode, towards the drain electrode. The MOSFET has a gate electrode in addition to the drain electrode and the source electrode.

While an example in which a MOSFET is used as the switching semiconductor device 411 is described in the present embodiment, an insulated-gate bipolar transistor (IGBT) may be used as an alternative for the MOSFET. If the IGBT is used, the transistor has an emitter electrode, a collector electrode, and a gate electrode, and a diode needs to be provided between the emitter electrode and the collector electrode separately.

After receiving command signals output from the motor controller 720, that is, inverter control command signals associated with six switching semiconductor devices 411, the driver circuit 420 creates a driving signal of a capacity and electric potential required for operation of each switching semiconductor device 411. Next, the driver circuit 420 supplies the created driving signal to the gate electrode of the switching semiconductor device 411, thus turning on or off the switching semiconductor device 411. The driver circuit 420 is an integrated circuit (IC) formed by integrating circuit elements such as a plurality of semiconductor devices constituting an amplifier, a voltage converter, and/or the like.

The smoothing circuit 430 smoothens the DC power supplied to the power module 410, by removing ripple components from the DC power supplied from the driving-dedicated power generator 200. The smoothing circuit 430 includes a capacitor 431 that is a capacitive element, and is electrically connected between a DC side of the power module 410 and an output side of the driving-dedicated power generator 200.

The sensor 440 includes a voltage sensor for detecting a capacitor voltage, that is, a DC voltage applied from the output side of the driving-dedicated power generator 200 to the DC side of the power module 410, and a current sensor for detecting a motor armature current supplied from an AC side (output side) of the power module 410 to the motor 100. The sensor 440 also includes a temperature sensor for detecting a temperature of the power module 410.

Although the voltage sensor and the current sensor are collectively shown in Fig. 2, both sensors are provided at respective appropriate measuring locations in an actual product. The current sensor, for instance, is provided on an output terminal of the power module 410 or on an electrical interconnecting conductor electrically connected to the output terminal.

The motor 100 is a field-winding-type synchronous motor that generates rotational motive power when driven by the three-phase AC power output from the inverter unit 400. The motor 100 includes a stator 110, a rotor 120, and a sensor 140.

The stator 110 and the rotor 120 are arranged so that central axes of both are concentric, and both elements are opposed to each other in a radial direction. The stator 110 is an armature constructed with stator coils (armature windings) 112 wound around a stator core (armature core) not shown. The rotor 120 is a field system constructed by winding a field coil 123 around a magnetic pole core (not shown).

The sensor 140 is a current sensor for detecting a motor field current supplied from the chopper circuit 740 to the field coil 123. The sensor 140 is also a rotation sensor adapted to detect rotation of the rotor 120. Either a resolver that changes according to a particular change in gap present between the rotor 120 and the stator 110, and outputs two voltages having a phase difference, or a Hall sensor with a Hall element (magnetic response element) that outputs an appropriate signal in response to a change in magnetism of a rotating magnetic member is used as the rotation sensor.

Although the current sensor and the rotation sensor are collectively shown in Fig. 2, both sensors are provided at respective appropriate measuring locations in an actual product. A rotatable section of the rotation sensor, for instance, is provided on a rotating shaft of the rotor 120, and a fixed section of the sensor is provided at a region opposed to the rotatable section of the sensor, in a radial direction. Thus, the rotation sensor outputs a signal in synchronization with the rotation of the rotor 120.

When the field current that the chopper circuit 740 has controlled is supplied to the field coil 123 via a conductor (not shown) that achieves electrical connection by mechanical sliding contact between the brush and the slip ring, the magnetic pole core is magnetized and magnetic fluxes occur in the rotor 220. The fluxes that have occurred in the rotor 120 pass through the magnetic circuit that returns from the pole core through the stator 110 back to the pole core. In the meantime, when the three-phase AC power that has been output from the inverter unit 400 is supplied to the stator coil 112, the stator 110 generates a rotating magnetic field. The rotating field that the stator 110 has generated, and the magnetic fluxes that the rotor 120 has generated cause magnetic attraction and repulsion to occur between the stator 110 and the rotor 120. Thus, the rotor 120 rotates and the rotational motive power resulting from the rotation is output to the rear wheels 4.

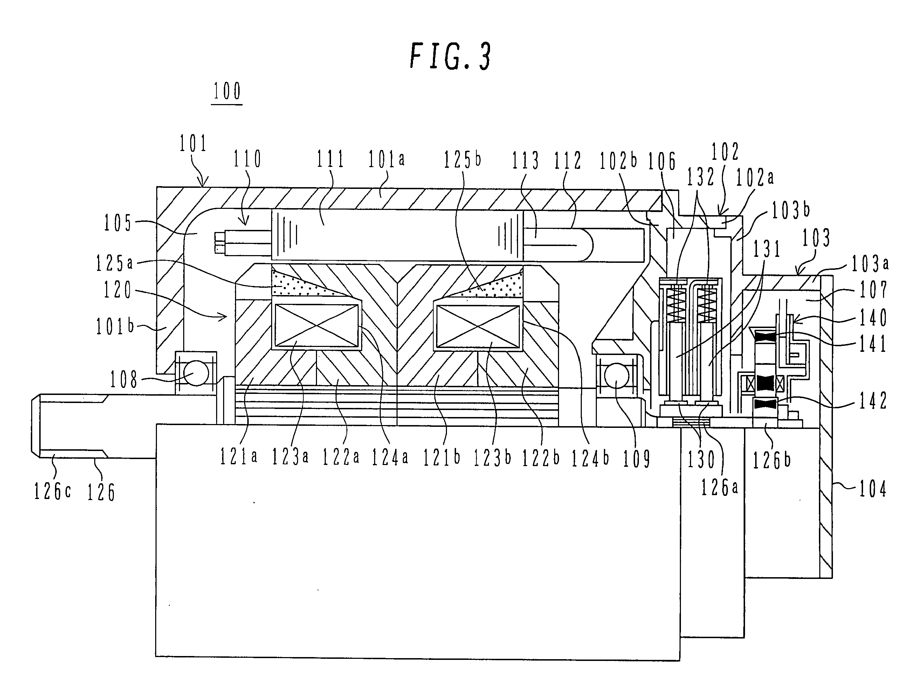

The motor 100 will be described in detail later herein using Fig. 3.

As described previously herein, the follower driving system in the present embodiment does not have a motor-driving battery. In the present embodiment, therefore, almost no DC power can be absorbed between the driving-dedicated power generator 200 and the inverter unit 400. In addition, the present embodiment employs current rotation based on d-q axis rotational coordinates, that is, so-called spectral control that allows highly responsive and highly accurate torque control of the inverter unit 400, and slow-response field current control of the driving-dedicated power generator 200. Accordingly, driving control of the motor 100 and power-generating control of the driving-dedicated power generator 200 are coordinated in the present embodiment so that the power-generating energy output from the driving-dedicated power generator 200, and consumption of the driving energy input to the inverter unit 400 and the motor 100 will be equal to each other. This makes the present embodiment able to prevent overvoltage due to surplus electric power from occurring in the capacitor 431 and the switching semiconductor device 411, and to avoid a lack of torque in the motor 100 due to a voltage decrease of the capacitor 431, caused by insufficiency in electric power.

Additionally, since as described previously herein, the present embodiment cannot absorb practically any DC power between the driving-dedicated power generator 200 and the inverter unit 400, regenerative operation of the motor 100 is basically impossible. For this reason, during the braking of the four-wheel drive vehicle 1, the present embodiment disengages the clutch 500 to interrupt the transmission of power between the rear wheels 4 and the motor 100, and hence to prevent the motor 100 from being driven by the driving force of the rear wheels 4. This makes it possible to prevent regenerative operation of the motor 100 in the present embodiment.

Furthermore, the present embodiment employs rectangular-wave control and pulse width modulation (PWM) control as switching control schemes for the inverter unit 400. Rectangular-wave control or PWM control is selectively used, depending upon an operating point (speed) of the motor 100. For example, PWM control is used for a stop or start of the vehicle and for low-speed traveling thereof (e.g., at a motor speed less than 5,000 rpm), and rectangular-wave control is used for middle-speed or high-speed traveling of the vehicle (e.g., at a motor speed of 5,000 rpm or more). In the present embodiment, therefore, during rectangular-wave control, one pulse waveform is output for a half period of a fundamental sine wave, and during PWM control, a plurality of pulse waveforms modulated in pulse width are output for the half period of the fundamental sine wave.

Next, a configuration of the motor 100 will be described using Figs. 3 to 7.

The present embodiment uses a field-winding-type synchronous motor, especially that having a Rundell-type rotor, as the rear-wheel driving motor 100 mounted in the four-wheel drive vehicle 1. The reasons for this are that the motor 100 is required to have the performance characteristic that the operating point is wide, and that an induction motor or permanent-magnet-type synchronous motor field-proven for vehicle driving does not always satisfy that requirement.

For example, to start the four-wheel drive vehicle 1 from a heavily snow-covered place, it becomes essential that the start be executable only by driving the rear wheels. A large torque is therefore required in a low-speed region of four-wheel drive vehicle 1. In addition, since the rear-wheel driving motor mounted in the four-wheel drive vehicle 1 is installed near the differential gear at the bottom of the vehicle body, physical dimensions thereof are limited and as mentioned above, a large torque is required, so a large gear ratio is assigned. To continue four-wheel driving in up to the middle-speed traveling region of the four-wheel drive vehicle 1, therefore, the motor for driving the rear wheels needs to be rotated at a very high speed.

However, the induction motor is neither suitable for low-voltage driving, nor sufficient in low-speed high-torque starting characteristics of the vehicle.

In addition, the permanent-magnet-type synchronous motor requires field-weakening control that weakens the field system by counteracting the magnetic fluxes of the permanent magnet in order to suppress voltage induction at a high-speed rotating side, and a rotating speed has its limits. If the rotating speed range is too wide, therefore, the permanent-magnet-type synchronous motor does not always permit driving in up to a necessary high-speed region, since motor efficiency at the highs-speed rotating side decreases and since temperature increases significantly.

In contrast to the above two kinds of synchronous motors, the field-winding-type synchronous motor, especially, that having a Rundell-type rotor can output a large torque at a low-speed rotating side, reduce field fluxes by suppressing a field current to suppress a voltage induced, and conduct driving in up to a necessary high-speed region.

That is to say, the field-winding-type synchronous motor with a Rundell-type rotor has a plurality of claw poles created by bending a pole core, the claw poles of different polarities are arranged at alternate positions in a circumferential direction, and a field coil is wound cylindrically around a cylindrical section at an inner-surface side of the claw poles. Because of this, the field-winding-type synchronous motor with a Rundell-type rotor can be basically made multipolar and since the field coil is strong against centrifugal force, the synchronous motor is suitable for high-speed rotation. In addition, a maximum achievable speed range can be broadened and field-weakening control can be simplified by controlling arbitrarily the field current.

There is a field-winding-type synchronous motor with a salient-pole-type rotor, but this synchronous motor is not suitable for high-speed rotation.

In addition, the field-winding-type synchronous motor with a Rundell-type rotor can easily strengthen the field system by having a permanent magnet between claw poles different in polarity. That is to say, the field-winding-type synchronous motor with a Rundell-type rotor has a magnetic circuit in which the magnetic fluxes pass through a rotor interior, and a magnetic circuit in which the magnetic fluxes enter a stator from the rotor via an air gap formed between the rotor and the stator and then return from the stator via the air gap to the rotor. During the vehicle start, since the large field current supplied to the field coil saturates the former magnetic circuit, a large portion of the fluxes of the permanent magnet provided between the claw poles pass through the latter magnetic circuit. A consequential increase in the quantity of fluxes entering the stator increases the torque. During high-speed rotation, however, since field-weakening control reduces the current supplied to the field coil and hence lessens the saturation of the former magnetic circuit, the fluxes of the permanent magnet that pass through the latter magnetic circuit are reduced.

In this way, the field-winding-type synchronous motor with a Rundell-type rotor automatically operates so that an increase in the field current increases the quantity of fluxes passing through the latter magnetic circuit, and so that a decrease in the field current reduces the quantity of fluxes passing through the latter magnetic circuit. Such operation of the synchronous motor improves the motor torque at the low-speed side and raises motor efficiency at the high-speed side.

In the present embodiment, therefore, the field-winding-type synchronous motor with a Rundell-type rotor is applied as the motor 100 for driving the rear wheels of the four-wheel drive vehicle 1, and the quantity of magnetic fluxes occurring is actively made variable by changing the field current with respect to the motor speed (the operating point of the motor 100). Thus, the operating point of the motor 100 can be driven within a permissible current range thereof at a maximum voltage of the motor-driven system of the four-wheel drive vehicle 1.

In addition, as described previously, the motor 100 for driving the rear wheels of the four-wheel drive vehicle 1 is installed at an underfloor position of the vehicle body, near the differential gear 600. To ensure water-proofing of the motor 100, therefore, the motor needs to be of an enclosed structure, and only natural cooling with externally released heat is adoptable since water-cooled or other forms of forced cooling cannot be adopted for reasons associated with dimensional limitation. As can be seen from these facts, the motor 100 is subjected to cooling-associated restrictions according to the particular installation environment. Because of this, it is necessary that the amount of heat occurring in the motor 100 should be suppressed for minimum internal temperature rise thereof.

As described previously, the motor 100 is of the enclosed water-proof type with a first housing 101, a second housing 102, a third housing 103, and a rear cover 104 arranged next to one another in an axial direction in that order, and adjacent ones of these elements are secured via bolts, screws, and/or other fasteners, thereby to form a casing.

The first housing 101 is constituted by integrated formation of a first frame 101a and a first bracket 101b. The second housing 102 is constituted by integrated formation of a second frame 102a and a second bracket 102b. The third housing 103 is constituted by integrated formation of a third frame 103a and a third bracket 103b.

The first to third frames 101a, 102a, 103a are each a cylindrical member having a circular and hollow inner surface. The first bracket 101b is an annular plate member blocking an opening at one lateral end of the first frame 101a in an axial direction thereof and having an axially penetrating circular hole in a central section of the member. The second bracket 102b is an annular plate member blocking an opening at the other lateral end of the first frame 101a in the axial direction thereof and an opening at one lateral end of the second frame 102a in an axial direction thereof, and having an axially penetrating circular hole in a central section of the member. The third bracket 103b is an annular plate member blocking an opening at the other lateral end of the second frame 102a in the axial direction thereof and an opening at one lateral end of the third frame 103a in an axial direction thereof, and having an axially penetrating circular hole in a central section of the member. An opening at the other lateral end of the third frame 103a in the axial direction thereof is blocked by the rear cover 104. The rear cover 104 is a plate-shaped member formed along an outer surface of the third frame 103a.

A motor room 105 is formed in a section surrounded by the first frame 101a, the first bracket 101b, and the second bracket 102b. An electricity supply room 106 is formed in a section surrounded by the second frame 102a, the second bracket 102b, and the third bracket 103b. A sensor room 107 is formed in a section surrounded by the third frame 103a, the third bracket 103b, and the rear cover 104. The motor room 105, the electricity supply room 106, and the sensor room 107 are arranged next to one another in an axial direction in that order from one lateral end (output shaft) of each room in the axial direction, along a shaft 126. Adjacent casing members are each connected together in a sandwiched condition via a sealing member, whereby airtightness at the connections between the adjacent casing members is enhanced to raise hermetical sealability of each room.

Although an example in which casing interior is divided into three rooms is described in the present embodiment, the number of rooms may be two or one. That is to say, the electricity supply room 106 and the sensor room 107 may be integrated into one room, or the motor room 105, the electricity supply room 106, and the sensor room 107 may be integrated into one room. Such integration is effective for integrating the inverter unit 400 axially with respect to the motor 100.

The first bracket 101b has a first bearing 108 at a central section. The second bracket 102b has a second bearing 109 at a central section. The first bearing 108 and the second bearing 109 rotatably support the shaft 126. The shaft 126 extends outward in an axial direction thereof, compared with the first bracket 101b and the second bracket 102b.

The motor room 105 internally has a stator 110 at the inner surface side of the first frame 101a. At an inner surface side of the stator 110, a rotor 120 is opposedly disposed via an air gap.

The stator 110 is a stationary section that generates a rotating field and has a stator core 111 for constructing a magnetic circuit, and a stator coil 112 mounted on the stator core 111 in order to create the rotating field.

The stator core 111 is a cylindrical magnetic material formed by stacking a plurality of silicon steel plates in an axial direction, then providing laser welds in several places on an outer surface of a cylindrical body consequentially obtained, and integrating the plurality of silicon steel plates. The outer surface is engaged with an inner surface of the first frame 101a by shrinkage fitting or the like, thereby to be secured to the first frame 101a. The outer surface of the stator core 111 forms a cylindrical yoke (not shown) that has a cylindrical wall thicker than an enclosure member. A plurality of teeth 111a are formed integrally with the yoke at the inner surface side thereof. The plurality of teeth 111a are formed continuously in an axial direction, extend from an inner surface of the yoke, towards an inner section in a radial direction, and are arranged at equal spatial intervals in a circumferential direction. A plurality of slots 111b are formed in an inner surface portion of the stator core 111 and between circumferentially adjoining teeth 111a. The plurality of slots 111b form a slender coil storage section recessed from the inner surface of the stator core 111, towards an outer section thereof in the radial direction, in such a form as to be opened at the inner surface side of the core 111, and extending from one lateral end thereof in the axial direction, through the inner surface thereof, towards the other lateral end of the core 111 in the axial direction. As with the plurality of teeth 111a, the slots 111b are arranged at equal spatial intervals in a circumferential direction.

The stator coil 112 is constituted by three star-connected phase coils (u-phase, v-phase, and w-phase). Star connection is an electrical connection scheme in which each phase coil is interconnected at one end so that the neutral point is formed. The stator coil 112 may use delta connection instead. Delta connection is an electrical connection scheme in which one of two ends of a first phase coil is connected to one end of a second phase coil and one end of a third phase coil is connected to the other end of the second phase coil.

Each phase coil is constructed by electrical connection of multiple coil conductors 113 (unit coils) for each phase, stored within each slot 111b. The coil conductors 113 are each a segment conductor stored across several slots 111b, in two slots 111b spaced according to a particular pole pitch of the rotor 120, the conductor being formed by one continuous copper wire having an enamel-insulated outer surface (i.e., a copper wire formed into a no-end state from one edge of the conductor to another edge). Two coil conductors 113 are stored in a vertical direction (depthwise or in a radial direction of the stator core 111) in each slot 111b. In other words, the present embodiment employs double-layer coiling to constitute the stator coil 112.

An example in which a segment conductor formed from a rectangular wire that has a rectangular sectional shape in an extending direction of the conductor (i.e., in an axial or longitudinal direction of the conductor) or has a rectangular cross-sectional shape is used as the coil conductor 113 is taken in the description of the present embodiment. The coil conductor 113 may have an elliptical sectional shape in the extending direction of the conductor (i.e., in the axial or longitudinal direction of the conductor), an elliptical cross-sectional shape, or any other shape resembling a rectangular shape, such as a shape created by sandwiching a round wire from two directions, thus forming a non-round wire, and then further forming a planar cross-sectional portion. The present embodiment uses a rectangular wire as the coil conductor 113, thereby to increase a rate of a cross-sectional area (i.e., space factor) of the coil conductor 113 in the extending direction thereof, with respect to an axial cross-sectional area of the slot 111b.

Hereinafter, the section of the coil conductor 113 in the present embodiment in the direction that the conductor extends (i.e., in the axial or longitudinal direction of the conductor) or the cross section of the conductor is referred to simply as the section.

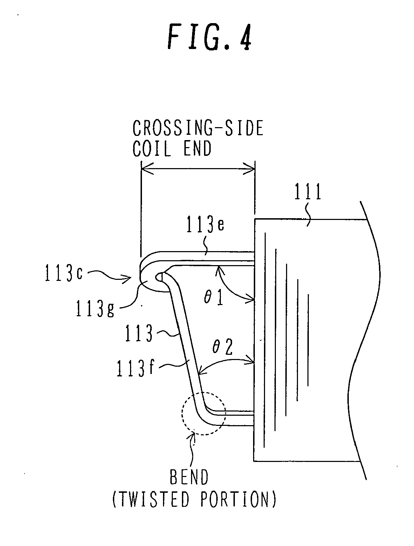

Other constituent elements of the coil conductor 113, a method of connecting coil conductors 113, and other aspects will be described in detail using Figs. 4 to 7.

The rotor 120 rotates by magnetic actions of the stator 110. In the present embodiment, the rotor 120 is of tandem construction. The tandem construction here refers to construction with a plurality of magnetic pole cores arranged next to one another in an axial direction on one output shaft 126. In the present embodiment, a first magnetic pole core and a second magnetic pole core are axially arranged next to each other to constitute the tandem type of rotor 120.

The first magnetic pole core (second magnetic pole core) includes a first claw pole core 121a, 122a (second claw pole core 121b, 122b), a first field coil 123a (second field coil 123b), and a first permanent magnet 125a (second permanent magnet 125b). The first and second magnetic pole cores are engaged with an outer surface of the shaft 126 so that claw pole cores of the same polarity are arranged adjacently to each other, for example, so that the first claw pole core 122a that functions as an N-pole in the first magnetic pole core, and the second claw pole core 121b that functions as an N-pole in the second magnetic pole core are arranged adjacently to each other.

The first claw pole core 121a, 122a (second claw pole core 121b, 122b) is axially opposed and has a plurality of claws each extending from a cylindrical portion of the pole core, towards a radial outer portion thereof, bent in the opposing direction of the pole core, and further extending in the opposing direction thereof. Both the first and second magnetic pole cores include 12 claws (6 claws at the N-pole side and 6 claws at the S-pole side). Briefly, the rotor 120 in the present embodiment has 12 magnetic pole pieces. Each claw has a trapezoidal or triangular outer surface so that circumferential width of the claw progressively decreases as it goes from a proximal end of the claw towards a distal end thereof, and a right-angled triangular circumferential (lateral) surface so that radial thickness of the claw (i.e., a relative radial distance of the inner surface side of the claw with respect to the outer surface side thereof) decreases progressively as it goes from the proximal end of the claw towards the distal end thereof. As a result of the axially opposed disposition of the first claw pole core 121a, 122a (second claw pole core 121b, 122b), the respective claws are arranged at alternate positions in the circumferential direction. That is to say, claws different in polarity are arranged circumferentially at alternate positions.

A first bobbin 124a (second bobbin 124b) is mounted in a region formed between an outer surface side of two axially juxtaposed cylindrical portions of the first claw pole core 121a, 122a (second claw pole core 121b, 122b), and an inner surface side of the multiple claws arranged in the circumferential direction of the first claw pole core 121a, 122a (second claw pole core 121b, 122b). The first bobbin 124a and the second bobbin 124b are both formed from a member having an electrical insulating property, for example, from an insulating-resin formed element. A first field coil 123a (second field coil 123b) constructed by winding a round wire through a plurality of turns in a circumferential direction is wound around the first bobbin 124a (second bobbin 124b).

When the first field coil 123a (second field coil 123b) is excited by a field current, the claws of the first claw pole core 121a (second claw pole core 122b) are magnetized to function as the S-pole, and the claws of the first claw pole core 122a (second claw pole core 121b), as the N-pole.

A first permanent magnet 125a (second permanent magnet 125b) is held in sandwiched form between every two circumferentially adjacent claws of the first claw pole core 121a, 122a (second claw pole core 121b, 122b). The first permanent magnet 125a and the second permanent magnet 125b are magnetized so as to generate magnetic fluxes in a direction (circumferential direction) opposed to the circumferential (lateral) face of each claw of the claw pole core, and so that the polarity of a face opposed to the circumferential (lateral) face of each claw of the claw pole core is the same as the polarity of the claws of the circumferentially opposed claw pole cores.

While magnetic pole centers of the first and second magnetic pole cores in the present embodiment are aligned, the magnetic pole centers may be shifted from each other according to the number of magnetic pole cores juxtaposed (in tandem form) or the number of coil conductors 113 arrayed crosswise along the slots 111b of the stator core 111. For example, since the number of magnetic pole cores juxtaposed in the present embodiment is two, the magnetic pole centers of the first and second magnetic pole cores may be shifted through 30 degrees in electrical angle (5 degrees in mechanical angle). Shifting the magnetic pole centers of the first and second magnetic pole cores in this fashion makes it possible to reduce a torque ripple and hence to reduce vibration and noise.

The first field coil 123a and the second field coil 123b are electrically connected to one pair of slip rings 130 arranged in the electricity supply room 106. The slip rings 130 are electroconductive annular members, which are provided on an outer surface of a shaft extension 126a extending towards the electricity supply room 106. One pair of brushes 131 are in sliding contact on an outer surface of the slip ring pair 130. One of the brushes 131 is electrically connected to a voltage regulator, and is supplied with a field current controlled by the voltage regulator. The field current that has been supplied to one of the brushes 131 is further supplied to the first field coil 123a and the second field coil 123b via the slip ring pair 130 and excites the coils 123a, 123b. Thus, the claws of the first claw pole core 121a and second claw pole core 122b are magnetized to function as the S-pole, and the claws of the first claw pole core 122a and second claw pole core 121b, as the N-pole.

The paired brushes 131 are each held by a brush holder 132, and each brush 131 is urged onto the outer surface of the associated slip ring 130 by a resilient pressure so as to come into sliding contact with the associated slip ring 130.

A resolver 140 for detecting the magnetic pole position of the rotor 120 is stored within the sensor room 107. The resolver 140 includes a resolver stator 141 and a resolver rotor 142 disposed opposedly to the resolver stator 141 via a mechanical air gap at the inner surface side of the resolver stator 141. The resolver 140 uses the resolver stator 141 to sense a magnetic change due to rotation of the resolver rotor 142, and outputs a signal associated with the sensed change, from the resolver stator 141 to the motor controller 720.

The resolver stator 141 is fixed to an inner surface of the third frame 103a. The resolver rotor 142 is fitted on an outer surface of a shaft extension 126b and opposed to the inner surface side of the resolver stator 141. The shaft extension 126b is a region extending more outward in an axial direction than the shaft extension 126a, and forms an end opposite to an output end 126c of the shaft 126 mechanically connected to the differential gear 600 via the clutch 500. Thus, the resolver rotor 142 rotates with the rotor 120.

A reference position of the resolver 140 may be set so as to match to magnetic centers of the first and second claw pole cores or may be set so as to match to a resultant induced voltage waveform obtained by combining a waveform of an induced voltage generated by the first claw pole core, and a waveform of an induced voltage generated by the second claw pole core. A position of the resolver stator 141 can be easily adjusted by removing the rear cover 104.

An example in which the resolver 140 is used as a magnetic pole position detector is described in the present embodiment. The magnetic pole position detector may be constructed of a permanent magnet and magnetic response elements such as Hall elements for sensing magnetic fluxes of the permanent magnet. In this case, the permanent magnet is rotated with the rotor of the motor, and Hall elements for three phases are arranged at an electrical angle interval of 120 degrees around the permanent magnet.

Next, a configuration of the stator coil 112 is described in detail using Figs. 4 to 7.

As described previously, the stator coil 112 is constructed by mounting a plurality of coil conductors 113 in a plurality of slots 111b provided in the stator core 111, and electrically connecting the plurality of coil conductors 113.

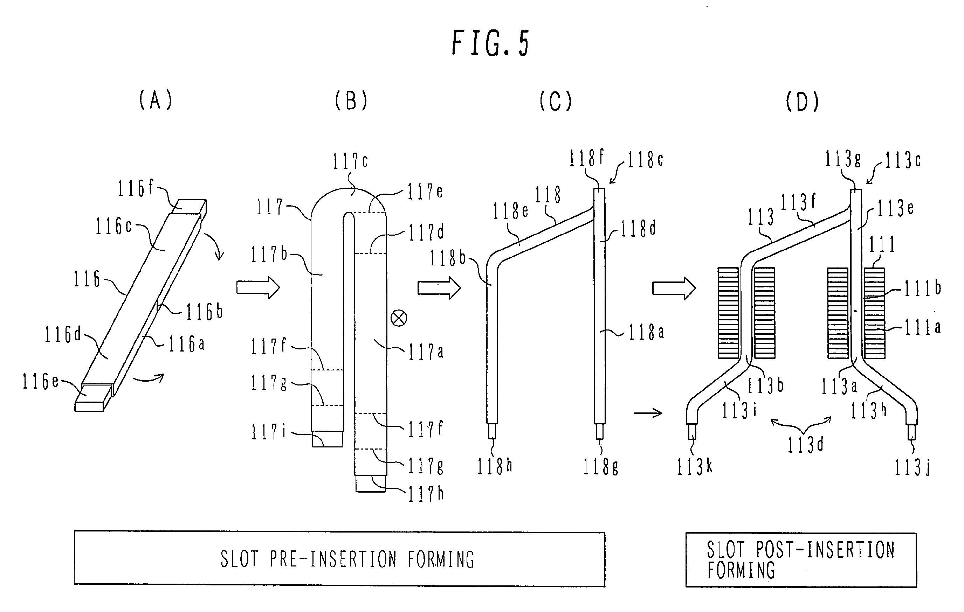

Each coil conductor 113 is a segment conductor formed by sequentially conducting three forming steps (in Figs. 5A to 5D) upon one continuous rectilinear rectangular wire 116 (in Fig. 5A) and finally, forming the wire 116 into a divergent form as shown in Fig. 5D. The forming steps are split into slot pre-insertion forming shown in Figs. 5A to 5C, and slot post-insertion forming shown in Fig. 5D.

First in the slot pre-insertion forming step, as shown in of Fig. 5A, enamel insulation is mechanically stripped from proximal ends 116e and 116f of one rectilinear rectangular conductor 116 obtained by cutting a rectangular-shaped wire to required length (the proximal ends 116e, 116f are associated with respective connecting portions of both proximal ends of the coil conductor 113).

After that, the rectangular conductor 116 is bent so that with a bending axis set on a line segment 116b which lengthwise bisects two faces of a smaller area among all four faces parallel to a central axis of the conductor 116, a rectilinear portion 116c at one side of the segment 116b and a rectilinear portion 116d at the other side of the segment 116b are arranged next to each other in parallel and extend in the same direction. That is to say, the rectangular conductor 116 is placed on a plane with one of two faces of a larger area of the conductor 116 as a placement surface, and the conductor 116 is bent into two parts midway in the lengthwise direction, along the placement surface of the conductor 116. The segment 116b is shifted to one side in the lengthwise direction of the rectangular conductor 116, rather than centrally in the lengthwise direction.

Lateral width (maximum width) of the rectangular conductor 116, in an axial rectangular section thereof, is greater than width of an opening in a slot 111b (i.e., maximum circumferential width of the stator core 111).

As shown in Fig. 5B, a U-shaped first formed conductor 117 is formed by execution of the above forming step. The first formed conductor 117 includes side portions 117a and 117b, and a bent-over portion 117c.

The side portions 117a, 117b are rectilinear portions arranged next to each other in parallel on one plane and extending in the same direction, and each side portion has proximal ends 117h and 117i formed by stripping the enamel insulation, as end portions formed at a side opposite to the bent-over portion 117c. In the present embodiment, the side portion 117b is formed to be longer than the side portion 117a so that axial layout positions of the two proximal ends of the coil conductor 113 are equal at an axial end of the stator core 111. Thus, changes in the lengths of the side portions due to subsequent forming are accommodated.

The bent-over portion 117c is a U-shaped portion that links one end of the side portion 117a, 117b (i.e., the end opposite to the proximal end 117h, 117i). The bent-over portion 117c extends from one lateral end of the side portion 117a, 117b, is bent over midway for a turn through 180 degrees, and leads to the other lateral end of the side portion 117a, 117b.

Next as shown in Fig. 5B, the side portion 117a of the first formed conductor 117 is bent with bending axes set on two line segments 117d and 117e which lengthwise bisect two faces of a smaller area among all four faces parallel to a central axis of the side portion 117a, at a lateral end of the bent-over portion 117c, and then the side portion 117a is spread away from the side portion 117b so that a clearance of the same dimension as a pitch of two slots spaced according to a particular rotating pole pitch is formed between the side portions 117a and 117b, and so that a stepped portion based on a radial (depthwise) dimension of the slots 111b (i.e., based on layout of upper and lower layers of the coil conductor 113 inside the slots 111b) is formed between the side portions 117a and 117b. That is to say, the side portion 117b is fixed and only the side portion 117a is pulled so that the side portion 117a moves towards a rear side of the paper of the drawing.

As shown in Fig. 5C, a U-shaped second formed conductor 118 is formed by execution of the above forming step. The second formed conductor 118 includes side portions 118a and 118b, and a crossover 118c.

The side portions 118a, 118b are rectilinear portions provided next to each other in parallel with a stepped portion thereon that is based on the radial (depthwise) dimension of the slots 111b, and extending in the same direction. Each side portion 118a, 118b has proximal ends 118g and 118h formed by stripping the enamel insulation, as end portions formed at a side opposite to the crossover 118c.

The crossover 118c is a right-angled triangular portion provided at one lateral end of the side portion 118a, 118b (i.e., an end opposite to the proximal end 118g, 118h). In order that a clearance equivalent to the pitch of two slots spaced according to the particular rotating pole pitch is formed between the side portions 118a and 118b, the crossover 118c crosses over from one of the two side portions 118a, 118b to the other thereof and links the side portions 118a, 118b at one lateral end. The crossover 118c includes crossover side portions 118d and 118e, and a bent-over portion 118f.

The crossover side portion 118d is a rectilinear portion extending rectilinearly from one lateral end of the side portion 118a (i.e., an end opposite to the proximal end 118g), in a direction of the end opposite to the proximal end 118g. The crossover side portion 118e is an inclined portion extending from one lateral end of the side portion 118h (i.e., an end opposite to the proximal end 118h), in a direction of the end opposite to the proximal end 118g, while at the same time extending in a crossover direction. The bent-over portion 118f is a U-shaped portion that links the opposite lateral ends of the crossover side portions 118d, 118e with respect to the side portions 118a, 118b so as to make the extending directions of the crossover side portions 118d, 118e change from one of the crossover side portions 118d, 118e to the other crossover side portion. The bent-over portion 118f extends towards a stepped portion formed between the crossover side portions 118a, 118b.

Next before the slot post-insertion forming step, a slot insertion step is executed and the second formed conductor 118 is mounted in two spaced slots 111b. The proximal ends 118g and 118h of the second formed conductor 118 are inserted from a rear end opposite to one axial end of the stator core 111 (with respect to a front output end of the shaft 126), into the two spaced slots 111b in such a form as to get over several slots 111b. At this time, one of the side portions 118a and 118b (in the present embodiment, the side portions 118b) is inserted into an upper layer of the slots 111b (i.e., depthwise bottom end of the slots), and the other of the side portions 118a and 118b (in the present embodiment, the side portions 118a) is inserted into a lower layer of the slots 111b (i.e., depthwise open end of the slots). The second formed conductor 118 is inserted so that the longitudinal direction of the section of the conductor equals the depthwise direction of the slots 111b.

The second formed conductor 118 is inserted into the two spaced slots in order by the execution of the above insertion step. When the insertion step is completed, multiple crossovers 118c are arranged at one axial lateral end of the stator core 111 (i.e., the insertion end of the second formed conductor 118) and a formed annular array structure is formed. In addition, at the other axial lateral end of the stator core 111 (i.e., the end opposite to the insertion end of the second formed conductor 118), the open ends of multiple side portions 118a, 118b that include the proximal ends 118g, 118h are arranged so as to protrude axially from the slots 111b, and another formed annular array structure is formed.

In the present embodiment, since the number of rotating pole pieces is 12 and that of slots is 36, the rotating pole pitch is equivalent to 3 slots of space. Accordingly, when the side portion 118b of the second formed conductor 118 is inserted into the upper layer of one of the two spaced slots 111b, the side portion 118a of the second formed conductor 118 is inserted into a lower layer of the third slot 111b from one of the two spaced slots 111b.

Quantitative combinations of rotating pole pieces and slots include, for example, a combination of 12 pole pieces and 72 slots, in which case, the rotating pole pitch is equivalent to 6 slots of space.

Next, as shown in Fig. 5D, the slot post-insertion step is executed. In the slot post-insertion step, the open ends of the side portions 118a, 118b of the second formed conductor 118 which has been inserted into the two spaced slots 111b are spread away from each other so that a bending direction of the open ends becomes inverse with respect to the crossover direction of the crossover 118c and so that an extending direction of the associated proximal ends (118g, 118h) equals the insertion (axial) direction of the second formed conductor 118 with respect to the stator core 111. After being spread, the open ends are both bent using two bending axes. The bending axes here are, as shown in Fig. 5B, two line segments 117f, 117g which lengthwise bisect two faces of a smaller area among all four faces parallel to an axis of the side portion 117a, 117b of the first formed conductor 117, at the proximal end 117h, 177i.

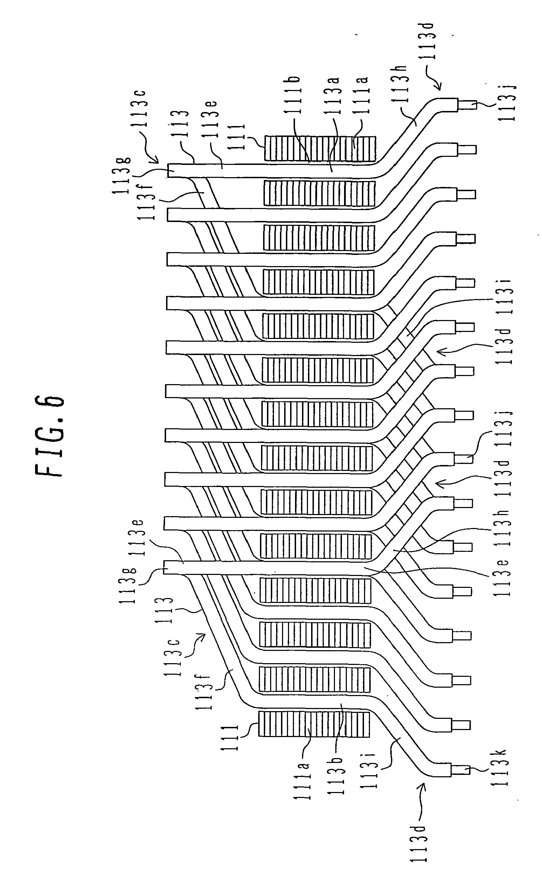

As shown in Fig. 5D and in Fig. 6, a coil conductor 113 is formed by execution of the above forming step. The coil conductor 113 includes side portions 113a and 113b, a crossover-side coil end 113c, and a connecting-side coil end 113d.

The side portion 113a is a rectilinear portion stored in one of two spaced slots 111b and disposed in an upper layer thereof (i.e., in a depthwise bottom end of the slots). The side portion 113b is a rectilinear portion stored in the other of the two spaced slots 111b and disposed in a lower layer thereof (i.e., in a depthwise open end of the slots).

The crossover-side coil end 113c is a right-angled triangular portion disposed at one axial lateral end of the stator core 111 (i.e., at the insertion end of the second formed conductor 118 with respect to the slots 111b), provided at one of the side portions 113a, 113b (i.e., at a side opposite to the connecting-side coil end 113d), guided outward from the slots 111b, crossing over from one of the side portions 113a, 113b to the other thereof through a distance equivalent to a pitch of two slots spaced according to a particular rotating pole pitch, and linking the side portions 113a, 113b at one lateral end of each thereof. The crossover-side coil end 113c includes crossover side portions (outward guide portions) 113e, 113f, and a bent-over portion 113g.

The connecting-side coil end 113d is a portion disposed at the other axial end of the stator core 111 with respect to the crossover-side coil end 113c (i.e., disposed at the side opposite to the insertion end of the second formed conductor 118 with respect to the slots 111b), provided at the other of the side portions 113a, 113b (i.e., at a side opposite to the crossover-side coil end 113c), guided outward from the slots 111b, extending in an opposite direction with respect to the crossover direction of the crossover-side coil end 113c, and connected to a connecting-side coil end 113d of any other coil conductor 113 extending in a fashion similar to that of the connecting-side coil end 113d of the coil conductor 113 shown in Fig. 5D and in Fig. 6. The connecting-side coil end 113d includes crossover side portions (outward guide portions) 113h, 113i, and connecting portions 113j, 113k.

The crossover side portion 113e is a rectilinear portion extending rectilinearly from one lateral end of the side portion 113a (i.e., an end opposite to the connection 113j), in a direction of the end opposite to the proximal end 118g. The crossover side portion 113f is an inclined portion extending from one lateral end of the side portion 113b (i.e., an end opposite to the connection 113k), in a direction of the end opposite to the connection 113k (i.e., a direction in which the crossover side portion axially is away from the stator core 111), while at the same time extending in a crossover direction. The bent-over portion 113g is a U-shaped portion that links the opposite lateral ends of the crossover side portions 113e, 113f with respect to the side portions 113a, 113b so as to make the extending directions of the crossover side portions 113e, 113f change from one thereof to the other thereof. The bent-over portion 113g extends towards a stepped portion formed between the crossover side portions 113a, 113b (i.e., towards a stepped portion between the upper and lower layers in the depthwise direction of the slots).

The crossover-side coil end 113c here is formed so that as shown in Fig. 4, an opening angle θ1 (mechanical angle) of the crossover side of the crossover side portion 113e with respect to one axial lateral edge of the stator core 111 (i.e., the insertion end of the second formed conductor 118 with respect to the slots 111b) is larger than an opening angle θ2 (mechanical angle) of the crossover side of the crossover side portion 113f with respect to the same edge of the stator core 111. In the present embodiment, θ1 is 90 degrees. Also, θ2 is smaller than θ1 and decreases below 45 degrees.

In addition, the crossover-side coil end 113c is formed so that because of the relationship between the angles θ1 and θ2 of the crossover side portions 113e, 113f, length of the crossover side portion 113f from one lateral end of the side portion 113b (i.e., an opposite end with respect to the connection 113k) to the bent-over portion 113g is, as shown in Fig. 4, greater than length of the crossover side portion 113e from one lateral end of the side portion 113a (i.e., an opposite end with respect to the connection 113j) to the bent-over portion 113g.

Furthermore, the crossover-side coil end 113c is formed so that because of the relationship between the angles θ1 and θ2 of the crossover side portions 113e, 113f, a layout position of the bent-over portion 113g in the circumferential direction of the stator core 111 (i.e., the crossover direction of the crossover-side coil end 113c) is, as shown in Fig. 6, present on an extension line of the side portion 113a, with an offset thereto, compared with an intermediate position of the pitch of the two slots spaced according to the particular rotating pole pitch.

The crossover side portion 113h is an inclined portion extending from the other lateral end of the side portion 113a (i.e., an end opposite to the bent-over portion 113g), in a direction opposite to the bent-over portion 113g (i.e., a direction in which the crossover side portion axially is away from the stator core 111), while at the same time extending in a direction opposite to the direction in which the crossover side portion crosses over from the side portion 113f, towards the side portion 113e. The connection 113k is a portion formed at a proximal end opposite to the side portion 113a of the crossover side portion 113h, and connected to the connection 113k under the state in which the connection overlaps the connection 113k existing at the proximal end of the inclined portion extending from the side portion 113b disposed in an upper layer of any other coil conductor 113 stored within other slots 111b.

The crossover side portion 113i is an inclined portion extending from the other lateral end of the side portion 113b (i.e., the end opposite to the bent-over portion 113g), in the direction opposite to the bent-over portion 113g (i.e., a direction in which the crossover side portion axially is away from the stator core 111), while at the same time extending in the direction opposite to the direction in which the crossover side portion crosses over from the side portion 113f, towards the side portion 113e. The connection 113k is a portion formed at a proximal end opposite to the side portion 113b of the crossover side portion 113i, and connected to the connection 113j under the state in which the connection overlaps the connection 113j existing at the proximal end of the inclined portion extending from the side portion 113a disposed in a lower layer of any other coil conductor 113 stored within other slots 111b.

The connections 113j, 113k overlap each other in the same direction as that in which the stepped portion formed between the side portions 113a, 113b is present (i.e., this stepped portion is formed between the depthwise upper and lower layers of the slots and is also the stepped portion present in the radial direction of the stator core 111).

A plurality of elements to be connected are formed at the other axial lateral end of the stator core 111 (i.e., the lateral end opposite to the insertion end of the second formed conductor 118) by the execution of the above forming steps. More specifically, each element to be connected includes the connection 113j of one of two coil conductors 113 (e.g., the proximal end of the crossover side portion 113h extending from the side portion 113a of the coil conductor 113 disposed in the lower layer of the fourth right-side slot 111b from the slot 111b at a left end of Fig. 6), and the connection 113k of the other of the two coil conductors 113 (e.g., the proximal end of the crossover side portion 113i extending from the side portion 113b of the coil conductor 113 disposed in the upper layer of the seventh right-side slot 111b from the slot 111b at the left end of Fig. 6). At this time, the plurality of elements to be connected are arrayed in a crossover direction of the connections 113j, 113k (i.e., the circumferential direction of the stator core 111) with the positions of the connections 113j, 113k matching in the crossover direction (i.e., the circumferential direction of the stator core 111) and with the connections 113j, 113k overlapping each other in the direction of the stepped portion formed between the side portions 113a, 113b. Thus, an annular protruding array structure is formed at the other axial lateral end of the stator core 111 (i.e., the lateral end opposite to the insertion end of the second formed conductor 118) by the plurality of elements to be connected.

A clearance between crossover side portions 113e adjacent to each other in the crossover direction is larger than a clearance between crossover side portions 113f adjacent to each other in the crossover direction, as shown in Fig. 6. A clearance between crossover side portions 113h adjacent to each other in the crossover direction is dimensionally equal to a clearance between crossover side portions 113i adjacent to each other in the crossover direction, as shown in Fig. 6. In addition, the clearance between the adjacent crossover side portions 113h in the crossover direction, and the clearance between the adjacent crossover side portions 113i in the crossover direction are, as shown in Fig. 6, smaller than a maximum clearance between the adjacent crossover side portions 113e in the crossover direction, and larger than a minimum clearance between the adjacent crossover side portions 113f in the crossover direction.

Although not shown, insulation is provided in sandwiched form in the clearance between the adjacent crossover side portions 113f in the crossover direction.

As shown in Fig. 6, layout positions of the elements to be connected that include the connections 113j, 113k, in the circumferential direction of the stator core 111 (i.e., the crossover direction of the crossover-side coil end 113c), differ from a layout position of the bent-over portion 113g and are somewhere in between the two slots spaced according to the particular rotating pole pitch.

The connections 113j, 113k are each connected by resistance brazing. This electrically interconnects in series the coil conductors 113 constituting the phase coils for each phase. At a neutral-point side end of each phase coil, a neutral wire (not shown) that includes the same rectangular wire as that of the coil conductor 113 is connected using substantially the same method as that of interconnecting the coil conductors 113. At a lateral end opposite to the neutral-point side end of each phase coil, a lead wire (not shown) that includes the same rectangular wire as that of the coil conductor 113 is connected using substantially the same method as that of interconnecting the coil conductors 113. These wire connections make it possible to construct a stator coil 112 based on distributed double-layer wave winding around a segment conductor, and to electrically connect the stator coil 112 to the power module 410 (power converter) of the inverter unit 400 via the lead wire.

The neutral wire, together with the coil conductor 113, is inserted from one axial lateral end of the stator core 111 (i.e., the insertion end of the second formed conductor 118), into the slot 111b, and then at the other axial lateral end of the stator core 111 (i.e., an end opposite to the insertion end of the second formed conductor 118), connected to the connection of the coil conductor 113 that is equivalent to the neutral-point side end of each phase coil.

The lead wire is connected at one axial lateral end of the stator core 111 (i.e., the insertion end of the second formed conductor 118) to the connection of the coil conductor that is equivalent to an end opposite to the neutral-point side end of each phase coil, and pulled from the other axial lateral end of the stator core 111 (i.e., the end opposite to the insertion end of the second formed conductor 118) outward to one axial lateral end of the stator core 111 (i.e., the insertion end of the second formed conductor 118).

While the present embodiment has been described taking resistance brazing as an example in connecting the connections 113j, 113k, other connecting methods such as TIG welding or silver brazing may be used instead.

In addition, although omitted from the drawings, slot-insulating paper for providing electrical insulation between the stator core 111 and the stator coil 112 is provided in the present embodiment, between the slot 111b and the coil conductor 113. The slot-insulating paper is inserted into the slot 111b before the coil conductor 113 is inserted into the slot 111b.

Furthermore, while an example in which, at one axial lateral end of the stator core 111 (i.e., the insertion end of the second formed conductor 118), the crossover side portion 113f is disposed at the depthwise bottom side of the slot 111b (i.e., an outside-diametral side of or externally to the stator core 111) with respect to the crossover side portion 113e is taken has been described in the present embodiment, the crossover side portion 113f may be disposed at the depthwise open side of the slot 111b (i.e., an inside-diametral side of or internally to the stator core 111).

Furthermore, the foregoing configuration of the stator 110 can also be applied to the stator of the power generator 9 for the vehicle-mounted auxiliary devices or to the stator 210 of the dedicated electric power generator for driving.

According to the present embodiment, since the plurality of coil conductors 113 each having a crossover-side coil end 113c that is a closed end, and a connecting-side coil end 113d that is an open end, are formed from a no-end rectangular conductor 116, that is, one continuous rectangular conductor 116, the stator coil 112 can be constructed by inserting the plurality of coil conductors 113 from one axial lateral end of the stator core 111 into two spaced slots 111b and then connecting the plurality of coil conductors 113 at the other axial lateral end of the stator core 111. The number of man-hours needed to mount windings on the stator core 111, therefore, can be reduced in comparison with that of a stator coil constructed by inserting a plurality of coil conductors (half-coil conductors) from both axial ends of a stator core into a plurality of slots and then connecting the plurality of coil conductors at both axial ends of the stator core. Thus, according to the present embodiment, working efficiency associated with the mounting of windings can be improved.

Additionally, according to the present embodiment, since the opening angle θ1 of the crossover side of the crossover side portion 113e with respect to one axial lateral edge of the stator core 111 is larger than the opening angle θ2 of the crossover side of the crossover side portion 113f with respect to the same edge of the stator core 111, point contact between the crossover side portion 113e of the crossover-side coil end can be made less prone to occur during the mounting of windings on the stator core 111.

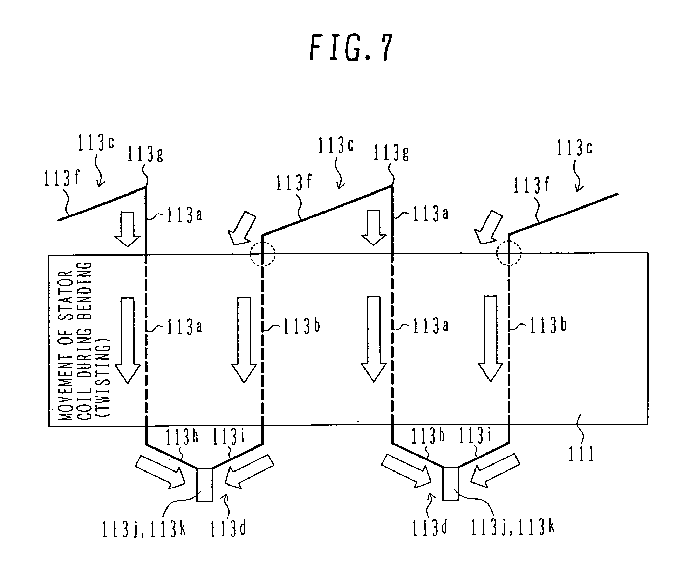

More specifically, since the crossover side portion 113e is rectilinear and since θ1 is 90 degrees, which is larger than the angle θ2 smaller than 45 degrees, a bend (twist) is not formed between the crossover side portion 113e and the side portion 113a, and when a coil conductor 113 is inserted into two spaced slots 111b and as shown in Fig. 7, when the side portion 113a is pulled towards the connecting-side coil end 113d (in a direction of an arrow) during the forming of the connecting-side coil end 113d, it is possible to prevent the crossover side portion 113e of the crossover-side coil end 113c from coming into point contact with the stator core 111. Thus, according to the present embodiment, it is possible to reduce insulation damage (insulation defect) that the crossover side portion 113e of the crossover-side coil end 113c may suffer in case of this crossover side portion 113e coming into point contact with the stator core 111.

Moreover, according to the present embodiment, since management of point contact of the crossover side portion 113e of the crossover-side coil end 113c with respect to the stator core 111 can be omitted, management of point contact of the coil conductor 113 with the stator core 111 needs only to be conducted, from the outer surface side of the stator core 111 (i.e., the depthwise bottom side (upper-layer side) of the slot 111b) at a place enclosed in a dotted-line box, near the crossover-side coil end 113c, in order to check for point contact with the stator core 111 due to bending (twisting) between the crossover side portion 113f and the side portion 113b. Consequently, the management of point contact of the coil conductor 113 with the stator core 111 can be facilitated. According to the present embodiment, therefore, when point contact with the stator core 111 due to bending (twisting) between the crossover side portion 113f and the side portion 113b is avoided, working efficiency associated with the mounting of windings on the stator core 111 is not reduced because of the above management of point contact.

For the above reasons, according to the present embodiment, it is possible, while improving working efficiency associated with the mounting of windings on the stator core 111, to improve the insulating performance of the stator core 111 and hence the fabricability and reliability of the motor 100.

In addition, according to the present embodiment, since the crossover side portion 113e of a large opening angle with respect to one axial edge of the stator core 111 is disposed at the inside-diametral side thereof (i.e., the depthwise open side (lower layer) of the slot 111b), a clearance between adjacent crossover side portions 113e in the crossover direction can be made larger than a clearance between the adjacent crossover side portions 113f in the crossover direction that are disposed at the outside-diametral side of the stator core 111 (i.e., the depthwise open bottom side (upper layer) of the slot 111b). More specifically, since the opening angle of each crossover side portion 113e is 90 degrees, the clearance between adjacent crossover side portions 113e in the crossover direction is set to be maximized. Because of this, according to the present embodiment, the clearance between adjacent crossover side portions 113e in the crossover direction is not made dependent upon height of the crossover-side coil end 113c of the coil conductor 113 (i.e., axial length from one axial edge of the stator core 111 to a proximal end of the longest protruding portion facing the side of the bent-over portion 113g that is opposite to the stator core 111). According to the present embodiment, therefore, the height of the crossover-side coil end 113c can be easily managed by defining the clearance between the adjacent crossover side portions 113f in the crossover direction that are arranged at the outside-diametral side of the stator core 111. This managing method improves quality of the coil conductor 113, compared with managing the height of the crossover-side coil end 113c by defining the clearance between adjacent crossover side portions 113e in the crossover direction. According to the present embodiment that allows the quality of the coil conductor 113 to be improved in this way, even if a bend (twist) in the coil conductor 113 is brought close to one axial edge of the stator core 111 in order to reduce the height of the crossover-side coil end 113c, point contact with the stator core 111 due to the bend (twist) in the coil conductor 113 can be reliably avoided and insulation damage to (insulation defects in) the coil conductor 113 due to the point contact can be reduced.

Furthermore, according to the present embodiment, insulation is disposed in the clearance between adjacent crossover side portions 113f in the crossover direction by insertion or coating to improve dielectric strength against an operating voltage, so the clearance between adjacent crossover side portions 113f in the crossover direction can be made even smaller and the height of the crossover-side coil end 113c can be further reduced.

Furthermore, according to the present embodiment, the rectilinear shape of each crossover side portion 113e makes it possible to reduce the amount of heat that the stator coil 112 generates. That is to say, if forming causes a bend (twist) in the coil conductor 113, since the corresponding portion becomes longer than other portions and hence decreases in cross-sectional area, resistance increases above that of other portions and the amount of heat increases above that of other portions. According to the present embodiment, however, since there is no bend (twist) between the crossover side portion 113e and the side portion 113a, the amount of heat that the stator coil 112 generates can be correspondingly reduced.

Furthermore, according to the present embodiment, since the crossover side portion 113f is disposed at the outside-diametral side of the stator core 111 (i.e., the depthwise open bottom end (upper layer) of the slot 111b), the bend (twist) between the crossover side portion 113e and the side portion 113a, that is, the portion that is higher than any other portions in resistance and in the amount of heat occurring can be brought close to the aluminum-made first housing 101 excellent in heat-releasing property, and the heat stemming from the corresponding portion can be transmitted to the first housing 101 efficiently and released to the outside of the motor 100. According to the present embodiment, therefore, it is possible to improve cooling performance of the stator coil 112 and reduce increases in the internal temperature of the motor 100.

If the rotor 120'has a cooling fan, disposing the crossover side portion 113f at the inside-diametral side of the stator core 111 (i.e., the depthwise open end (lower layer) of the slot 111b) makes efficient cooling of the bend (twist) between the side portion 113b and the crossover side portion 113f possible by assigning a flow of cooling air of a relatively low temperature.

Furthermore, according to the present embodiment, since the crossover side portion 113e is formed into a rectilinear shape and only the crossover side portion 113e has a bend (twist), the coil conductor 113 can be formed into a simple structure, not a complex structure. Because of this, according to the present embodiment, dies that are used to form the coil conductor 113 can also be formed into a simple structure, and the number of man-hours required for the forming of the coil conductor 113 can be reduced. According to the present embodiment, therefore, manufacturing costs for the motor 100 can be reduced and the motor 100 itself can be easily manufactured.

Furthermore, according to the present embodiment, since the opening angle of the crossover side portion 113e with respect to one axial lateral edge of the stator core 111 is 90 degrees that is larger than the opening angle of the crossover side portion 113f, and since the crossover side portion 113e has a rectilinear shape, it is possible, during the forming of the connecting-side coil end 113d, to pull in the side portion 113a towards the connecting-side coil end 113d, and the bend (twist) formed between the side portion 113a and the crossover side portion 113h can be away from the other axial lateral edge of the stator core 111. According to the present embodiment, therefore, point contact between the stator core 111 and the bend (twist) formed between the side portion 113a and the crossover side portion 113h can be reliably avoided and insulation damage to (insulation defects in) the coil conductor 113 due to point contact of the particular bent (twisted) portion can be reduced.

Furthermore, according to the present embodiment, since the crossover side portion 113e is formed into a rectilinear shape and only the crossover side portion 113f has a bend (twist), variations in an axial position of the crossover side portion 113e and in an axial position of the bend (twist) provided in the crossover side portion 113f can be removed. This, in turn, makes it possible, according to the present embodiment, to remove variations in the height of the crossover-side coil end 113c (i.e., axial length from one axial edge of the stator core 111 to the proximal end of the longest protruding portion facing the side of the bent-over portion 113g that is opposite to the stator core 111). According to the present embodiment, therefore, the height of the crossover-side coil end 113c can be correspondingly reduced once any variations in the height of the crossover-side coil end 113c have been removed.

Furthermore, according to the present embodiment, since the crossover side portion 113e is formed into a rectilinear shape and only the crossover side portion 113f has a bend (twist), the shapes of the conductors at both sides of the bent-over portion 113g can be made different from each other. Thus, according to the present embodiment, when the second formed conductor 118 is inserted into two spaced slots 111b, relational adequacy between the side portions of the second formed conductor 118 inserted and the slots 111b into which the conductor is inserted can be easily confirmed and mistakes in the insertion of the second formed conductor 118 into the two spaced slots 111b can be reduced.

Furthermore, according to the present embodiment, since the opening angle θ1 of the crossover side of the crossover side portion 113e with respect to one axial edge of the stator core 111 is 90 degrees that is larger than the opening angle θ2 of the crossover side of the crossover side portion 113f with respect to the same edge of the stator core 111, after all coil conductors 113 have been mounted on the stator core 111, the lead wire, the neutral wire, and other coil conductors of dissimilar shapes can be mounted on the stator core 111. For this reason, according to the present embodiment, it is possible to improve the mountability of windings on the stator core 111 and improve the fabricability of the motor 100.

Moreover, according to the present embodiment, since the opening angle θ1 of the crossover side of the crossover side portion 113e with respect to one axial edge of the stator core 111 is larger than the opening angle θ2 of the crossover side of the crossover side portion 113f with respect to the same edge of the stator core 111, the length of the crossover side portion 113f from one end of the side portion 113b (i.e., the opposite end with respect to the connection 113k) to the bent-over portion 113g can be made greater than the length of the crossover side portion 113e from one end of the side portion 113a (i.e., the opposite end with respect to the connection 113j) to the bent-over portion 113g. This makes it possible, according to the present embodiment, to change the crossover side portions 113e, 113f in resonance frequency. According to the present embodiment, therefore, a point of resonance with the electromagnetic noise stemming from the stator core 111 can be distributed into multiple form and a peak level of the electromagnetic noise can be reduced.

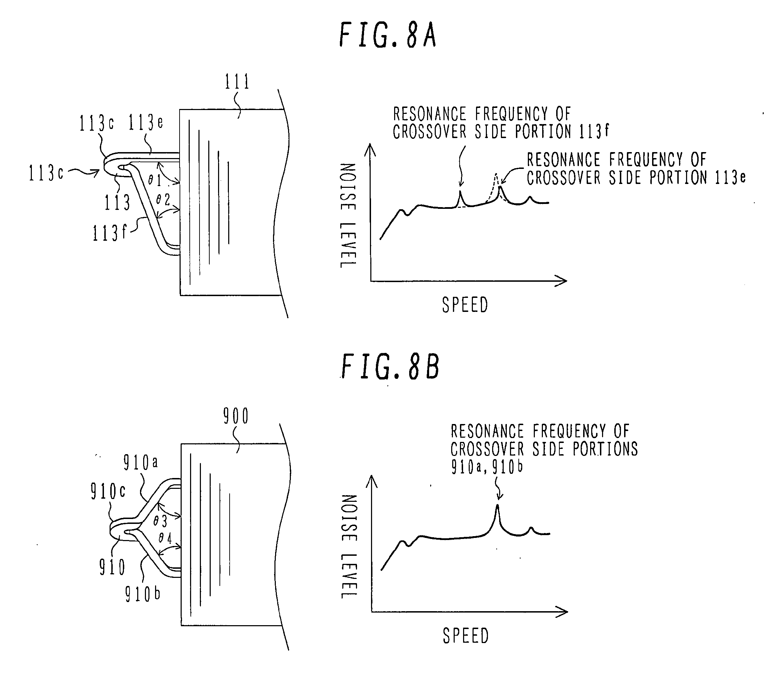

That is to say, as shown in Fig. 8B, in a comparative example where, with substantially an equal value assigned between an opening angle θ3 of a crossover side of a crossover side portion 910a with respect to one axial edge of a stator core 900, and an opening angle θ4 of a crossover side of a crossover side portion 910b with respect to the same edge of the stator core 900, length of the crossover side portion 910b from one lateral end of one of the side portions to a bent-over portion 910c is substantially equal to length of the crossover side portion 910a from one lateral end of the other side portion to the bent-over portion 910c, the crossover side portions 910a and 910b are substantially the same in resonance frequency. The number of resonance points overlapping in frequency of the electromagnetic noise stemming from the stator core 900, therefore, is 1 in the comparative example. This results in a peak electromagnetic noise level increasing in the comparative example.

In contrast to this, in the present embodiment, since as shown in Fig. 8A, the crossover side portions 113e and 113f differ in resonance frequency, the resonance point that overlaps a frequency of the electromagnetic noise stemming from the stator core 111 is distributed into two parts and the peak level of the electromagnetic noise can therefore be reduced.

### Second Embodiment

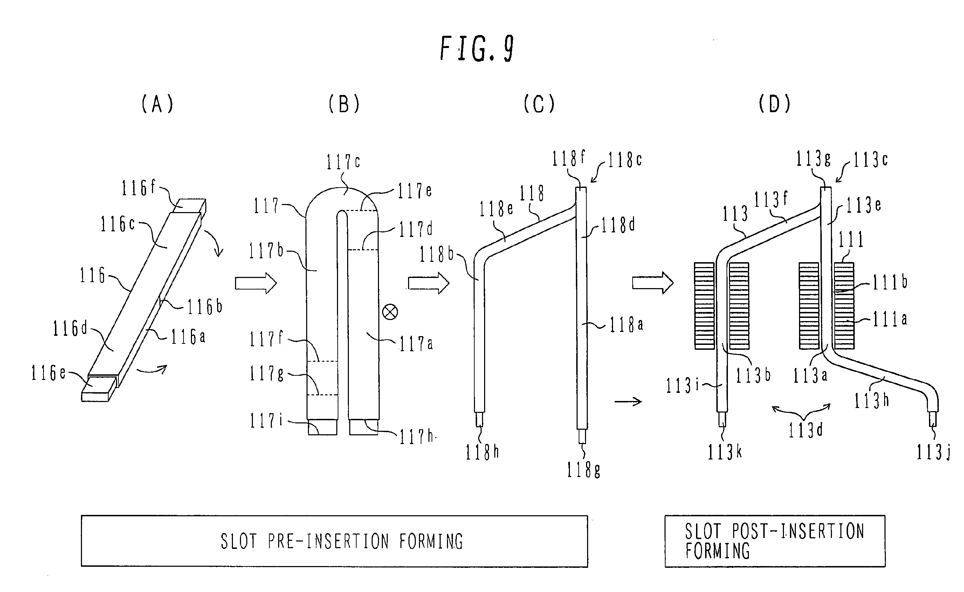

A second embodiment of the present embodiment will be described in accordance with Figs. 9 to 11.

The present embodiment is an improvement on the first embodiment, and in the present embodiment, the crossover side portions of the connecting-side coil end 113d are formed similarly to those of the crossover-side coil end 113c. That is to say, the crossover side portion 113i is a rectilinear portion extending rectilinearly from the other lateral end of the side portion 113b (i.e., the side opposite to the crossover side portion 113f), towards the side opposite to the crossover side portion 113f. The crossover side portion 113h is an inclined portion extending from the other lateral end of the side portion 113a (i.e., the end opposite to the crossover side portion 113e), in a direction of the end opposite to the crossover side portion 113e (i.e., the direction in which the crossover side portion axially is away from the stator core 111), while the same extends in a direction opposite to the crossover direction of the crossover-side coil end 113c.

In the present embodiment, line segment 116b in Fig. 9A serves as a segment that longitudinally bisects two faces 116a of a smaller area of all four faces parallel to the central axis of the rectangular conductor 116. Because of this, when the rectangular conductor 116 is bent, the lengths of the side portions 117a and 117b of the first formed element 117 become equal as shown in Fig. 9B. In addition, in the present embodiment, when the end of the side portion 117a that faces the bent-over portion 117c is bent with the segments 117d, 117e as bending axes, the length of the side portion 118a of the second formed element 118 becomes greater than the length of the side portion 118b, as shown in Fig. 9C.

The connecting-side coil end 113d is formed so that the opening angle (90 degrees) of the crossover side of the crossover side portion 113i with respect to an end face of the other axial end of the stator core 111 (i.e., the side opposite to the insertion end of the second formed conductor 118 with respect to the slots 111b) is larger than the opening angle (smaller than 45 degrees) of the crossover side of the crossover side portion 113h with respect to the same end of the stator core 111.

Additionally, because of the angular relationship between the crossover side portions 113h, 113i, the length of the crossover side portion 113h from the other lateral end of the side portion 113a (i.e., the opposite end with respect to the crossover side portion 113e) to the connection 113j is greater than the length of the crossover side portion 113i from the other lateral end of the side portion 113b (i.e., the opposite end with respect to the crossover side portion 113f) to the connection 113k.

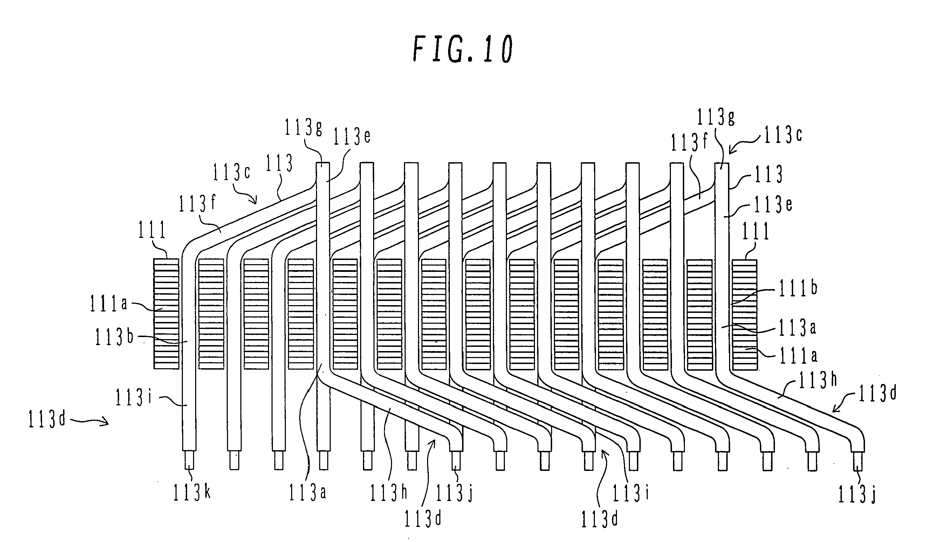

Furthermore, because of the angular relationship between the crossover side portions 113h, 113i, the element to be connected that includes the connections 113j, 113k in the circumferential direction of the stator core 111 (i.e., the crossover direction of the crossover-side coil end 113d)is formed to be disposed on an extension line of the side portion 113b, with an offset thereto, compared with an intermediate position of the pitch of two slots spaced according to a particular rotating pole pitch as shown in Fig. 10. Also, the layout position of the bent-over portion 113g in the circumferential direction of the stator core 111 (i.e., the crossover direction of the crossover-side coil end 113c) is the same as the layout position of the above element to be connected, in the circumferential direction of the stator core 111 (i.e., the crossover direction of the connecting-side coil end 113d).

The clearance between crossover side portions 113i adjacent to each other in the crossover direction is, as shown in Fig. 10, equal to the clearance between crossover side portions 113e adjacent to each other in the crossover direction. In addition, as shown in Fig. 10, the clearance between the adjacent crossover side portions 113i in the crossover direction, and the clearance between the adjacent crossover side portions 113e in the crossover direction are larger than the clearance between crossover side portions 113h adjacent to each other in the crossover direction, and the clearance between crossover side portions 113f adjacent to each other in the crossover direction.

At the other axial end of the stator core 111 (i.e., the side opposite to the insertion end of the second formed conductor 118), the crossover side portion 113h is disposed at the depthwise open side of the slots 111b (i.e., the inside-diametral side of the stator core 111 or internally thereto) with respect to the crossover side portion 113i, and this relationship in layout position is a reciprocal of that of the crossover side portions 113e, 113f of the crossover-side coil end 113c. Accordingly, reversal of the layout positions of the crossover side portions 113e, 113f also reverses the layout positions of the crossover side portions 113h, 113i.

If the crossover side portion at one lateral end of the side portion 113a is rectilinear and the crossover side portion at one lateral end of the side portion 113b is oblique, the crossover side portion at the other lateral end of the side portion 113a is oblique and the crossover side portion at the other lateral end of the side portion 113b is rectilinear.

Other structural parts are substantially the same as in the first embodiment, and description of the other structural aspects is omitted.

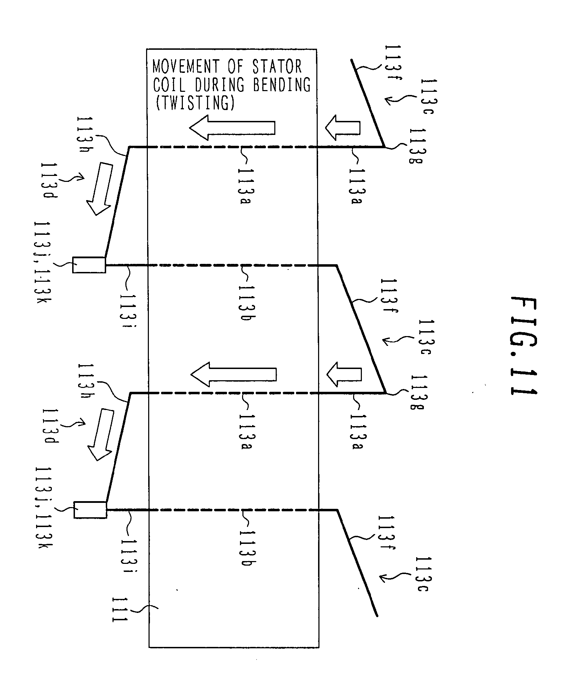

According to the present embodiment, it is possible to achieve substantially the same advantageous effects as obtainable in the first embodiment, and since the crossover side portion 113i is formed into a rectilinear shape and since the bend (twist) in the connecting-side coil end 113d is formed only on the crossover side portion 113h, a bend (twist) is not formed between the crossover side portions 113i and 113b and it is consequently possible to prevent the crossover side portion 113i of the connecting-side coil end 113d from coming into point contact with the stator core 111. In addition, as shown in Fig. 11, when the connecting-side coil end 113d of the coil conductor 113 is formed, although the side portion 113a is pulled towards the connecting-side coil end 113d (i.e., in a direction of an arrow), the side portion 113b is not pulled towards the connecting-side coil end 113d. Because of this, according to the present embodiment, the bend (twist) between the crossover side portion 113f and the side portion 113b can be prevented from coming into point contact with the stator core 111. This, in turn, makes it possible, according to the present embodiment, to avoid point contact of the bend (twist) in coil conductor 113 with respect to the stator core 111, and to further reduce insulation damage to (insulation defects in) the coil conductor 113 due to the point contact.

## Claims

1. An electric machine comprising:
a core (111) having a plurality of slots (111b); and
a winding including a plurality of unit windings having a conductor side portion, a crossover-side conductor end (113c) and a connecting-side conductor end (113d),
wherein the conductor side portion is stored in any two of the slots that are spaced from each other,
the crossover-side conductor end (113c) is guided from one end of the core outside the slots (111b) and crossing over from one of the two slots (111b) to the other in order to link the two conductor side portions (113a), and
the connecting-side conductor end (113d) having two conductor-connecting ends, and being guided from the other end of the core (111) outside the slots (111b), and
the conductor side portion (113a), the crossover-side conductor end (113c) and the connecting-side conductor end (113d) are interconnected each other to construct the winding;
wherein
the plurality of unit windings are each formed under a no-end state at any portions from one of the two conductor-connecting ends to the other; and
the crossover-side conductor end (113c) includes a first conductor lead-out portion guided outward from one of the two slots and extending from one end of the core (111), in a direction where the lead-out portion is away from the core end, a second conductor lead-out portion guided outward from the other of the two slots (111b) and extending from one end of the core (111), in a direction where the lead-out portion is away from the core end, and a bent-over conductor portion (113g) linking the first and second conductor lead-out portions (113e, 113f) and causing the extending directions thereof to change from one of the first and second lead-out portions (113e, 113f) to the other; wherein an angle θ1 of the first conductor lead-out portion (113e) in the crossing direction thereof with respect to an end face of one end of the core (111) is greater than an angle θ2 of the second conductor lead-out portion (113f) in the crossing direction thereof with respect to the same end face of the core (111).

2. The electric machine according to claim 1,
wherein:
length of the second conductor lead-out portion (113f) extending from the end face of one end of the core (111) to the bent-over conductor portion (113g) is greater than length of the first conductor lead-out portion (113e) extending from the same end face of the core (111) to the bent-over conductor portion (113g).

3. The electric machine according to claim 1,
wherein:
the bent-over conductor portion (113g) is disposed with an offset from an intermediate position of a pitch of the two slots (111b) to the first conductor lead-out portion (113e).

4. The electric machine according to claim 1,
wherein:
the second conductor lead-out portion (113f) is disposed at a depthwise bottom side of the slots (111b) with respect to the first conductor lead-out portion (113e).

5. The electric machine according to claim 1,
wherein:
the second conductor lead-out portion (113f) is disposed at an opposite side of a depthwise bottom side of the slots (111b) with respect to the first conductor lead-out portion (113e).

6. The electric machine according to claim 1,
wherein:
a clearance between the first conductor lead-out portions (113e) adjacent to each other in the crossover direction is greater than a clearance formed between the second conductor lead-out portions (113f) adjacent to each other in the crossover direction.

7. The electric machine according to claim 6,
wherein:
an insulating member is disposed in the clearance between the second conductor lead-out portions (113f) adjacent to each other in the crossover direction.

8. The electric machine according to claim 1,
wherein:
the connecting-side conductor end (113d) includes a third conductor lead-out portion guided outward from one of the two slots (111b), extending in a direction where the lead-out portion is away from the other end of the core (111), and having one of the conductor-connecting ends formed at a proximal end, and a fourth conductor lead-out portion guided outward from the other of the two slots (111b), extending in a direction where the lead-out portion is away from the other end of the core (111), and having one of the conductor-connecting ends (113d) formed at a proximal end; wherein the third and fourth conductor lead-out portions are bent in directions opposite to the respective crossing directions, and the two conductor-connecting ends (113d) each overlap conductor-connecting ends (113d) of the other unit windings.

9. The electric machine according to claim 8,
wherein:
a connection at which the conductor-connecting ends (113d) of two different unit windings overlap is disposed at a position different from that of the bent-over conductor portion (113g).

10. The electric machine according to claim 9,
wherein:
the connection is disposed at an intermediate position of a pitch of the two slots (111b).

11. The electric machine according to claim 8,
wherein:
of the clearances defined between the first conductor lead-out portions (113e) adjacent to each other in the crossover direction, between the second conductor lead-out portions (113f) adjacent to each other in the crossover direction, between the third conductor lead-out portions adjacent to each other in the crossover direction, between the fourth conductor lead-out portions adjacent to each other in the crossover direction, the clearance defined between the first conductor lead-out portions (113e) is the largest and the clearance defined between the second conductor lead-out portions (113f) is the smallest.

12. The electric machine according to claim 1,
wherein:
the connecting-side conductor end includes a third conductor lead-out portion guided outward from one of the two slots, extending in a direction where the lead-out portion is away from the other end of the core, and having one of the conductor-connecting ends formed at a proximal end, and a fourth conductor lead-out portion guided outward from the other of the two slots, extending in a direction where the lead-out portion is away from the other end of the core, and having one of the conductor-connecting ends formed at a proximal end; wherein an angle θ3 of an opposite side of the crossover side of the third conductor lead-out portion (910a) with respect to the other end face of the end of the core end (900) is smaller than an angle θ4 of an opposite side of the crossover side of the fourth conductor lead-out portion (910b) with respect to the other end face of the core end (900).

13. The electric machine according to claim 12,
wherein:
length of the third conductor lead-out portion (910a) from the other edge of the core end (900) to the conductor-connecting end is greater than length of the fourth conductor lead-out portion (910b) from the other edge of the core end (900) to the conductor-connecting end.

14. The electric machine according to claim 12,
wherein:
the conductor-connecting end is disposed at the same position as that of the bent-over conductor portion (910c).

15. The electric machine according to claim 12,
wherein:
when the second conductor lead-out portion (113f) is disposed at a depthwise bottom side of the slots (111b) with respect to the first conductor lead-out portion (113e), the third conductor lead-out portion is disposed at an opposite side of the depthwise bottom side of the slots (111b) with respect to the fourth conductor lead-out portion; and
if the second conductor lead-out portion (113f) is disposed at the opposite side of the depthwise bottom side of the slots (111b) with respect to the first conductor lead-out portion (113e), the third conductor lead-out portion is disposed at the depthwise bottom side of the slots with respect to the fourth conductor lead-out portion.

16. The electric machine according to claim 12,
wherein:
a clearance defined between the third conductor lead-out portions (113h) adjacent to each other in the crossover direction is smaller than a clearance defined between the fourth conductor lead-out portions adjacent to each other in the crossover direction.

17. The electric machine according to claim 16,
wherein:
an insulating member is disposed in the clearance between the adjacent third conductor lead-out portions (113h) in the crossover direction.

18. The electric machine according to claim 12,
wherein:
the third conductor lead-out portion (113h) is bent in a direction opposite to the crossover direction;
the fourth conductor lead-out portion extends rectilinearly from the other end of the core (111);
the conductor-connecting end of the third conductor lead-out portion (113h) is connected with the conductor-connecting end of the fourth conductor lead-out portion of any other unit winding with them overlapped; and
the conductor-connecting end of the fourth conductor lead-out portion is connected with the conductor-connecting end of the third conductor lead-out portion (113h) of any other unit winding with them overlapped.

19. The electric machine according to claim 1,
wherein:
the winding conductor (113) constituting the unit winding is of a rectangular cross-sectional shape.

20. An electric machine comprising:
a core (111) having a plurality of slots (111b); and
a core (112) having a plurality of slots (112b); and
a winding including a plurality of unit windings having a conductor side portion (113a), a crossover-side conductor end (113c) and a connecting-side conductor end, wherein the conductor side portion (113a) is stored in any two of the slots (111b) that are spaced from each other,
the crossover-side conductor end (113c) is guided from one end of the core (111) outside the slots (111b) and crossing over from one of the two slots (111b, 112b) to the other in order to link the two conductor side portions (113a), and
the connecting-side conductor end (113d) having two conductor-connecting ends, and being guided from the other end of the core (111) outside the slots (111b), and
the conductor side portion (113a), the crossover-side conductor end (113c) and the connecting-side conductor end (113d) are interconnected each other to construct the winding;
wherein:
the plurality of unit windings are each formed under a no-end state at any portions from one of the two conductor-connecting ends (113d) to the other; and
the crossover-side conductor end (113c) includes a first conductor lead-out portion (113e) guided outward from one of the two slots (111b) and extending from one end of the core (111), in a direction where the lead-out portion is away from the core end (111), a second conductor lead-out portion (113f) guided outward from the other of the two slots (111b) and extending from one end of the core (111), in a direction where the lead-out portion is away from the core end (111), and a bent-over conductor portion (113g) linking the first and second conductor lead-out portions (113e, 113f) and causing the extending directions thereof to change from one of the first and second lead-out portions (113e, 113f) to the other; wherein length of the second conductor lead-out portion (113f) extending from an end face of one end of the core end (111) to the bent-over conductor portion (113g) is greater than length of the first conductor lead-out portion (113e) extending from the same end face of the end (111) to the bent-over conductor portion (113g).

21. An electric machine comprising:
a core (111) having a plurality of slots (111b); and
a winding including a plurality of unit windings having a conductor side portion (113a), a crossover-side conductor end (113c) and a connecting-side conductor end (113d),
wherein the conductor side portion (113a) is stored in any two of the slots (111b) that are spaced from each other,
the crossover-side conductor end (113c) is guided from one end of the core (111) outside the slots (111b) and crossing over from one of the two slots (111b) to the other in order to link the two conductor side portions (113a), and
the connecting-side conductor end (113d) having two conductor-connecting ends, and being guided from the other end of the core (111) outside the slots (111b), and
the conductor side portion (113a), the crossover-side conductor end (113c) and the connecting-side conductor end (113d) are interconnected each other to construct the winding; wherein:
the plurality of unit windings are each formed under a no-end state at any portions from one of the two conductor-connecting ends (113d) to the other'; and
the crossover-side conductor end (113c) includes a first conductor lead-out portion (113e) guided outward from one of the two slots (111b) and extending from one end of the core (111), in a direction where the lead-out portion is away from the core end (111), a second conductor lead-out portion (113f) guided outward from the other of the two slots (111b), then bent, and extending towards the first conductor lead-out portion (113e) so as to be away from one end of the core (111), and a bent-over conductor portion (113g) linking the first and second conductor lead-out portions (113e, 113f) and causing the extending directions thereof to change from one of the first and second lead-out portions (113e, 113f) to the other, the bent-over conductor portion (113g) being disposed with an offset towards the first conductor lead-out portion (113e) with respect to an intermediate position of a pitch of the two slots (111b).

22. A process for manufacturing an electric machine, the process comprising:
a forming step that includes the substeps of
preparing a plurality of winding conductors, and then bending each of the plural winding conductors into two pieces to form a plurality of first formed conductor constructed of two side portions extending in line in one direction, and a bent-over portion (113g) linking the side portions at one end of each side portion in a longitudinal direction thereof,
in order that a stepped portion based on a depthwise dimension of each of a plurality of slots (111b) formed in a core (111) is formed between the side portions of the first formed conductor (113), spreading one side portion of the first formed conductor away from the other side portion thereof to form a plurality of second formed conductors each constructed of two side portions extending in one direction and having a difference in surface height, a rectilinear portion extending rectilinearly at one longitudinal end of each of the side portions, a crossover portion inclusive of an oblique portion extending obliquely with respect to each of the side portions, and of a bent-over portion (113g) linking the rectilinear portion and the oblique portion, and an open end formed at the other longitudinal end of each of the side portions,
inserting each of the plural second formed conductors from one end of the core (111) into the two spaced slots (111b) such that one of the side portions of each second formed conductor is disposed at one depthwise side of one of the two spaced slots (111b) and such that the other of the side portions of each second formed conductor is disposed at the other depthwise side of the other of the two spaced slots (111b), and
forming each of side portions which protrude from the other end of the core (111) to an external portion of each of the slots (111b), such that each side portion is bent in a direction opposite to a crossover direction of the crossover portion and such that a proximal end of the side portion overlaps, of all side portion proximal ends of the other second formed conductors (113), only a proximal end of a side portion different in depthwise layout position on the slot; and
after execution of forming in the forming step, connecting the overlapping ends to each other.

23. A process for manufacturing an electric machine, the process comprising:
a forming step that includes the substeps of
after making a plurality of winding conductors ready for use, bending each of the plural winding conductors (113) into two pieces to form a plurality of first formed conductor constructed of two side portions extending in line in one direction, and a bent-over portion (113g) linking the side portions at one end of each side portion in a longitudinal direction thereof,
in order that a stepped portion based on a depthwise dimension of each of a plurality of slots (111b) formed in a core (111) is formed between the side portions of the first formed conductor, spreading one side portion of the first formed conductor away from the other side portion thereof to form a plurality of second formed conductors each constructed of two side portions extending in one direction and having a difference in surface height, a rectilinear portion extending rectilinearly at one longitudinal end of each of the side portions, a crossover portion inclusive of an oblique portion extending obliquely with respect to each of the side portions, and of a bent-over portion (113g) linking the rectilinear portion and the oblique portion, and an open end formed at the other longitudinal end of each of the side portions,
inserting each of the plural second formed conductors from one end of the core into the two spaced slots (111b) such that one of the side portions of each second formed conductor is disposed at one depthwise side of one of the two spaced slots (111b) and such that the other of the side portions of each second formed conductor is disposed at the other depthwise side of the other of the two spaced slots (111b), and
forming side portions which protrude from the other end of the core (111) to an external portion of each of the slots (111b), by, while one of the protruding side portions rectilinearly is extended, causing a proximal end of the rectilinear side portion to overlap the other proximal end of the side portion of any other of the second formed conductors, and bending the other of the protruding side portions in a direction opposite to a crossover direction of the crossover portion such that a proximal end of the bent side portion overlaps a proximal end of one side portion of any other of the second formed conductors; and
after execution of forming in the forming step, connecting the overlapping ends to each other.
